# EUROPEAN PATENT APPLICATION

(11) **EP 4 290 385 A1**
(43) Date of publication of application: **13.12.2023**
(21) Application number: 22770187.7
(22) Date of filing: 19.01.2022
(51) Int. Cl.: G06F 11/36

(54) **ANOMALY DETECTION METHOD AND APPARATUS**

(30) Priority: 17.03.2021 CN 202110290324
(71) Applicant: Huawei Technologies Co., Ltd., Shenzhen, Guangdong 518129 (CN)
(72) Inventor: BI, Gang, Shenzhen, Guangdong 518129 (CN); FANG, Dong, Shenzhen, Guangdong 518129 (CN)
(74) Representative: Gill Jennings & Every LLP
(86) International application number: PCT/CN2022/072759
(87) International publication number: WO 2022/193827

(57) **Abstract**

An abnormality detection method and apparatus are provided, and belong to the field of network technologies. The method includes: displaying a target interface, where n-dimensional visualization space defined by n coordinate axes, and m data points and p target regions that are located in the n-dimensional visualization space are displayed in the target interface, each coordinate axis corresponds to one detection indicator of a detected object, location data of each data point in the n-dimensional visualization space is a data record of the detected object, the data record includes n items of data, each item of data is a value record of the one detection indicator of the detected object, the p target regions are determined by n one-dimensional data intervals, the n one-dimensional data intervals correspond to the n coordinate axes, and each one-dimensional data interval is within a range of a corresponding coordinate axis; and if k data points in the m data points are located outside the target region, displaying, in the target interface, that the detected object is abnormal. This application helps improve accuracy and flexibility of abnormality detection for the detected object.

## Description

This application claims priority to Chinese Patent Application No. 202110290324.3, filed on March 17, 2021 and entitled "ABNORMALITY DETECTION METHOD AND APPARATUS", which is incorporated herein by reference in its entirety.

### TECHNICAL FIELD

This application relates to the field of network technologies, and in particular, to an abnormality detection method and apparatus.

### BACKGROUND

A process is a program that has been running in a computer. As a detected object during running, the process needs to experience abnormality detection. For example, during running of the process, data sampling is performed on the process, and abnormality detection is performed on the process based on sampled data of the process.

Currently, a process of performing abnormality detection on a process includes: performing data sampling on the process at sampling moments, and performing abnormality detection on the process based on sampled data obtained through sampling. However, a final detection result of the process in the foregoing detection solution may be greatly different from an actual running status of the process. Consequently, accuracy of the detection solution is low, and flexibility is poor.

### SUMMARY

This application provides an abnormality detection method and apparatus, to help improve efficiency of abnormality detection for a detected object. The technical solutions of this application are as follows:

According to a first aspect, an abnormality detection method is provided. The method includes: displaying a target interface, where n-dimensional visualization space defined by n coordinate axes, and m data points and p target regions that are located in the n-dimensional visualization space are displayed in the target interface, each coordinate axis corresponds to one detection indicator of a detected object, location data of each data point in the n-dimensional visualization space is a data record of the detected object, the data record includes n items of data, each of the n items of data is a value record of the one detection indicator of the detected object, the p target regions are determined by n one-dimensional data intervals, the n one-dimensional data intervals correspond to the n coordinate axes, and each one-dimensional data interval is within a range of a corresponding coordinate axis, where n ≥ 2, m ≥ 1, p ≥ 1, and n, m, and p are all integers; and if k of the m data points are located outside a target region, that the detected object is abnormal is displayed in the target interface, where m ≥ k ≥ 1, and k is an integer.

According to the technical solutions provided in this application, the abnormality detection apparatus performs the abnormality detection on the detected object by combining data of n dimensions (the data of the n dimensions forms a data record) of the detected object by using a same algorithm. This helps improve accuracy and flexibility of abnormality detection on the detected object. In addition, the abnormality detection apparatus displays, in the n-dimensional visualization space by using a data point in combination with a data region (for example, a target region), a data point that is for representing a data record of the detected object. In this case, a running status of the detected object is visualized, and a user can intuitively understand the running status of the detected object.

Optionally, the method further includes: If the m data points are all located in the target region, that the detected object is normal is displayed in the target interface.

According to the technical solutions provided in this application, when the m data points corresponding to the detected object are all located in the target region, the abnormality detection apparatus determines that the detected object is normal, and that the detected object is normal in the target interface, to implement normal detection of the detected obj ect (in other words, a normal operation of the detected object is detected).

Optionally, the n one-dimensional data intervals correspond to n regions in the n-dimensional visualization space, the target region is an overlapping region of the n regions, and if k data points in the m data points are located outside the target region, the displaying, in the target interface, that the detected object is abnormal includes: If k data points in the m data points are located outside an i^{th} region, that an i^{th} detection indicator of the detected object is displayed is abnormal in the target interface, where the i^{th} region is a corresponding region of an i^{th} one-dimensional data interval in the n-dimensional visualization space, and the i^{th} one-dimensional data interval corresponds to the i^{th} detection indicator of the detected object.

According to the technical solutions provided in this application, when k data points in the m data points are located outside the i^{th} region, the abnormality detection apparatus displays, in the target interface, that an i^{th} detection indicator of the detected object is abnormal, which helps implement refined abnormality detection on the detected object. In addition, a user can intuitively understand abnormal indicators of the detected objects.

Optionally, the n coordinate axes correspond to n detection indicators of the detected object, the n detection indicators include a processor usage and a memory usage, and each data record includes a processor usage of the detected object and a memory usage of the detected object. If k data points in the m data points are located outside the i^{th} region, the displaying, in the target interface, that an i^{th} detection indicator of the detected object is abnormal includes: If k data points in the m data points are located outside a first region, that a processor usage of the detected object is abnormal is displayed in the target interface, where the first region is a corresponding region of a first one-dimensional data interval in the n-dimensional visualization space, and the first one-dimensional data interval corresponds to the processor usage; if k data points in the m data points are located outside a second region, that the memory usage of the detected object is abnormal is displayed in the target interface, where the second region is a corresponding region of a second one-dimensional data interval in the n-dimensional visualization space, and the second one-dimensional data interval corresponds to the memory usage; and if k data points in the m data points are located outside the first region and outside the second region, that a processing capability of the detected object is abnormal is displayed in the target interface. A quantity of the k data points located outside the first region, a quantity of the k data points located outside the second region, and a quantity of the k data points located outside the first region and outside the second region may be equal or unequal. For ease of description in this application, all described as k data points.

Optionally, the n one-dimensional data intervals correspond to the n detection indicators, and the method further includes: a test data set corresponding to each detection indicator of the n detection indicators is obtained, where the test data set corresponding to each detection indicator includes: t items of sampled data, of the detected object, obtained by performing data sampling on the detection indicator of the detected object after a preset service pressure is applied to the detected object, where t ≥ 1, and t is an integer; and it is determined that, based on the test data set corresponding to each detection indicator, a one-dimensional data interval corresponding to the detection indicator.

According to the technical solutions provided in this application, the abnormality detection apparatus obtains the one-dimensional data interval corresponding to the detection indicator, in this way, the abnormality detection apparatus can determine the target region based on the n one-dimensional data intervals corresponding to the n detection indicators, and display, in the target interface, the target region and a data point corresponding to the data record, to visualize a running status of the detected object.

Optionally, the determining, based on a test data set corresponding to each detection indicator, a one-dimensional data interval corresponding to the detection indicator includes: A maximum value in t items of sampled data in the test data set is determined as an upper limit value of the one-dimensional data interval, a value of an upper quartile in t items of sampled data is determined as an upper limit value of the one-dimensional data interval, or an upper limit value of the one-dimensional data interval determined based on an average value and a variance of t items of sampled data; and a minimum value in t items of sampled data in the test data set is determined as a lower limit value of the one-dimensional data interval, a value of a lower quartile in t items of sampled data is determined as a lower limit value of the one-dimensional data interval, a lower limit value of the one-dimensional data interval is determined based on the average value and the variance of the t items of sampled data, or the lower limit value of the one-dimensional data interval is determined 0.

Optionally, the determining, based on a test data set corresponding to each detection indicator, a one-dimensional data interval corresponding to the detection indicator includes: t items of sampled data in the test data set are inputted into a first model, to enable the first model to perform calculation based on the t items of sampled data to obtain an upper limit value of the one-dimensional data interval. The t items of sampled data in the test data set are inputted into a second model, to enable the second model to perform calculation based on the t items of sampled data to obtain a lower limit value of the one-dimensional data interval, or determine a lower limit value of the one-dimensional data interval as 0.

Optionally, the detected object is a computer, a process running in a computer, or a virtual machine running in a computer.

Optionally, the method is executed by a controller or a management device configured to manage a detected object.

Optionally, the detection indicator includes at least one of the following: the processor usage, the memory usage, an amount of used memory, a quantity of used handles, a quantity of used threads, an amount of read data, an amount of written data, an amount of read/written data, a throughput, an amount of transmitted data, a service success rate, average service duration, a total quantity of executed tasks, a service saturation, a quantity of errors in executing a task, a young generation garbage collection time (young generation garbage collection time, YGCT), a full generation garbage collection time (full generation garbage collection time, FGCT), and a sum of YGCT and FGCT.

According to a second aspect, an abnormality detection apparatus is provided, and the abnormality detection apparatus includes modules configured to perform the method provided in any one of the first aspect or the optional implementations of the first aspect. The modules may be implemented based on software, hardware, or a combination of software and hardware, and the modules may be randomly combined or divided based on a specific implementation.

According to a third aspect, an abnormality detection apparatus is provided, where the abnormality detection apparatus includes a memory and a processor.

The memory is configured to store a computer program.

The processor is configured to execute the computer program stored in the memory, in this way, the abnormality detection apparatus performs the abnormality detection method provided in any one of the first aspect or the optional implementations of the first aspect.

According to a fourth aspect, a computer-readable storage medium is provided. The computer-readable storage medium stores a computer program, and when the computer program is executed by a processor, the abnormality detection method provided in any one of the first aspect or the optional implementations of the first aspect is implemented.

According to a fifth aspect, a computer program product is provided. The computer program product includes a program or code, and when the program or code runs on a processor, the processor is enabled to perform the abnormality detection method provided in any one of the first aspect or the optional implementations of the first aspect.

According to a sixth aspect, a chip is provided. The chip includes a programmable logic circuit and/or program instructions, and when the chip runs, the chip is configured to implement the abnormality detection method provided in any one of the first aspect or the optional implementations of the first aspect.

The technical solutions provided in this application bring the following beneficial effects:

According to the abnormality detection method and apparatus provided in this application, n-dimensional visualization space defined by n coordinate axes, and m data points and p target regions that are located in the n-dimensional visualization space are displayed in the target interface displayed by the abnormality detection apparatus, each coordinate axis corresponds to one detection indicator of a detected object, location data of each data point in the n-dimensional visualization space is a data record of the detected object, the data record includes n items of data, each of the n items of data is a value record of the one detection indicator of the detected object, the p target regions are determined by n one-dimensional data intervals, the n one-dimensional data intervals correspond to the n coordinate axes, each one-dimensional data interval is within a range of a corresponding coordinate axis; and if k data points in the m data points are located outside a target region, and the abnormality detection apparatus displays, in the target interface, that the detected object is abnormal. Based on the technical solutions provided in this application, the abnormality detection apparatus performs the abnormality detection on the detected object by combining data of n dimensions (the data of the n dimensions forms a data record) of the detected object by using a same algorithm. This helps improve accuracy and flexibility of abnormality detection on the detected object. In addition, the abnormality detection apparatus displays, in the n-dimensional visualization space by using a data point in combination with a data region (for example, a target region), a data point that is for representing a data record of the detected object. In this case, a running status of the detected object is visualized, and a user can intuitively understand the running status of the detected object.

### BRIEF DESCRIPTION OF DRAWINGS

FIG. 1 is a flowchart of an abnormality detection method according to an embodiment of this application;
FIG. 2 is a schematic diagram of a first target interface according to an embodiment of this application;
FIG. 3 is a schematic diagram of a second target interface according to an embodiment of this application;
FIG. 4 is a schematic diagram of a third target interface according to an embodiment of this application;
FIG. 5 is a schematic diagram of a fourth target interface according to an embodiment of this application;
FIG. 6 is a schematic diagram of a fifth target interface according to an embodiment of this application;
FIG. 7 is a schematic diagram of a sixth target interface according to an embodiment of this application;
FIG. 8 is a schematic diagram of a seventh target interface according to an embodiment of this application;
FIG. 9 is a schematic diagram of an eighth target interface according to an embodiment of this application;
FIG. 10 is a schematic diagram of a ninth target interface according to an embodiment of this application;
FIG. 11 is a schematic diagram of a tenth target interface according to an embodiment of this application;
FIG. 12 is a schematic diagram of an eleventh target interface according to an embodiment of this application;
FIG. 13 is a schematic diagram of a twelfth target interface according to an embodiment of this application;
FIG. 14 is a schematic diagram of a thirteenth target interface according to an embodiment of this application;
FIG. 15 is a schematic diagram of a fourteenth target interface according to an embodiment of this application;
FIG. 16 is a schematic diagram of a fifteenth target interface according to an embodiment of this application;
FIG. 17 is a schematic diagram of a sixteenth target interface according to an embodiment of this application;
FIG. 18 is a flowchart of obtaining a one-dimensional data interval according to an embodiment of this application;
FIG. 19 is a schematic diagram of a structure of an abnormality detection apparatus according to an embodiment of this application; and
FIG. 20 is a schematic diagram of a structure of another abnormality detection apparatus according to an embodiment of this application.

### DESCRIPTION OF EMBODIMENTS

The following further describes in detail implementations of this application with reference to accompanying drawings.

Terms in embodiments of this application are first described.

Detected object: An object on which abnormality detection is performed. The detected object is, for example, a computer, a process running in a computer, a virtual machine running in a computer.

Detection indicator: including a processor usage, a memory usage, an amount of used memory, a quantity of used handles, a quantity of used threads, an amount of read data, an amount of written data, an amount of read and written data, network traffic, a network throughput, a quantity of successful tasks, a quantity of failed tasks, a total quantity of tasks, a task saturation, average task duration, YGCT, FGCT, a sum of the YGCT and the FGCT, and the like.

Visualization (visualization): A theory, method and technology using computer graphics and an image processing technology to convert data into graphics or images for displaying the graphics or images and performing interaction processing. Visualization is the practice to convert data information and knowledge into a visual form. Visualization space is the practice to convert data information and knowledge into a spatial visual form.

n-dimensional visualization space: Visualization space obtained by presenting data information based on n-dimensional space is the n-dimensional visualization space. The n-dimensional visualization space is defined by n coordinate axes, the n coordinate axes share the origin, and directions of the n coordinate axes are different, where n ≥ 2, and n is an integer. In embodiments of this application, the n coordinate axes of the n-dimensional visualization space are in a one-to-one correspondence with n detection indicators (in other words, meanings of the n coordinate axes are in a one-to-one correspondence with the n detection indicators).

Data record: A record includes n items of data. Each of the n items of data is data in one dimension, and each of the n items of data is a value record of one detection indicator. In embodiments of this application, a data record of a detected object is obtained by performing data sampling on n detection indicators of the detected object at a sampling moment, and n items of data in the data record are in a one-to-one correspondence with the n detection indicators of the detected object.

For example, there are n items of data in a first data record of a detected object obtained by performing data sampling on n detection indicators of the detected object at a first sampling moment, where the n items of data in the first data record include: a processor usage, a memory usage, an amount of used memory, a quantity of used handles, a quantity of used threads, an amount of read data, an amount of written data, an amount of read and written data, a network traffic, a network throughput, a quantity of successful tasks, a quantity of failed tasks, a total quantity of tasks, a task saturation, average task duration, YGCT, FGCT, a sum of the YGCT and the FGCT. Meanings of the items of data in a data record are described as follows:

Processor usage: A usage of a processor of a computer used by the detected object (for example, a process or a virtual machine) at the first sampling moment (or a used percentage of a processor of a computer used by the detected object); or a usage of a processor of the detected object (for example, a computer) (or a usage of a processor of the detected object) at the first sampling moment. The value of the processor usage is in percentage (%).

Memory usage: A usage of a memory of a computer used by the detected object (for example, a process or a virtual machine) at the first sampling moment (or a used percentage of a memory of a computer used by the detected object); or a usage of a memory of the detected object (for example, a computer) (or a usage of a memory of the detected object) at the first sampling moment. The value of the memory usage is in percentage (%).

Amount of used memory: An amount of usage of a memory of a computer used by the detected object (for example, a process or a virtual machine) at the first sampling moment (or an amount of used memory of a computer occupied by the detected object); or an amount of usage of a memory of the detected object (for example, a computer) (or an amount of usage of a memory of the detected object) at the first sampling moment. A unit of the amount of used memory is megabyte (MB).

Quantity of used handles: A quantity of handles used by the detected object to execute a task at the first sampling moment. The unit of the quantity of used handles is piece.

Quantity of used threads: A quantity of threads used by the detected object to execute a task at the first sampling moment. The unit of the quantity of used threads is piece.

Amount of read data: also referred to as an amount of IO read data, which is an amount of data read by the detected object in a first sampling periodicity, for example, an amount of data read by the detected object from a storage medium in the first sampling periodicity. The unit of the amount of read data is byte (Byte).

Amount of written data: also referred to as an amount of IO written data, which is an amount of data written by the detected object in the first sampling periodicity, for example, an amount of data written by the detected object into the storage medium in the first sampling periodicity. The unit of the amount of written data is byte.

Amount of read and written data: also referred to as an amount of IO read and written data, which is an amount of data read and written by the detected object in the first sampling periodicity. The unit of the amount of read and written data is byte.

Network traffic: an amount of data transmitted by the detected object in the first sampling periodicity. The unit of the network traffic is byte.

Network throughput: an amount of data transmitted by the detected object in a unit time in the first sampling periodicity. The unit of the network throughput is Byte.

Quantity of successful tasks: a quantity of tasks that are successfully executed by the detected object in the first sampling periodicity. The unit of the quantity of successful tasks is piece.

Quantity of failed tasks: a quantity of tasks that fail to be executed by the detected object in the first sampling periodicity. The unit of the quantity of failed tasks is piece.

Total quantity of tasks: a total quantity of tasks executed by the detected object in the first sampling periodicity. The unit of the total quantity of tasks is piece.

Task saturation: a percentage of a quantity of tasks actually executed by the detected object to a quantity of tasks that can be executed by the detected object in the first sampling periodicity. A value of the task saturation is in percentage (%).

Average task duration: an average time consumed by the detected object to execute a single task in the first sampling periodicity. The unit of the average task duration is millisecond (ms).

YGCT: a garbage collection time read by the detected object from a young generation garbage (young generation garbage, YGC) region of a computer at the first sampling moment. The unit of YGCT is ms.

FGCT: a garbage collection time read by the detected object from a full generation garbage (full generation garbage, FGC) region of a computer at the first sampling moment. The unit of FGCT is ms.

Sum of the YGCT and the FGCT: a sum of the garbage collection time read by the detected object from the YGC region at the first sampling moment and the garbage collection time read from the FGC region.

For example, refer to Table 1. Table 1 shows multiple pieces of (for example, four pieces) data records of the detected object provided in embodiments of this application. An example in which Table 1 uses the detected object as the process, and the n detection indicators of the detected object include: the processor usage, the memory usage, the amount of used memory, the quantity of used handles, the quantity of used threads, the YGCT, the FGCT, the amount of read data, the amount of written data, and the amount of read and written data. Each data record in a data record 1 to a data record 4 in Table 1 is obtained by performing data sampling on the n detection indicators of the detected object at a same sampling moment.

**Table 1**

| Data record | Processor usage (%) | Memory usage (%) | Amount of memory usage (MB) | Quantity of used handles (piece) | Quantity of used threads (piece) | YGCT (ms) | FGCT (ms) | Amount of read data (Bytes) | Amount of written data (Bytes) | Amount of read and written data (Bytes) |
|---|---|---|---|---|---|---|---|---|---|---|
| Data record 1 | 151.90 | 14.36 | 1177 | 599 | 399 | 4.383 | 1.419 | 0 | 24576 | 24576 |
| Data record 2 | 156.20 | 14.36 | 1177 | 599 | 399 | 4.732 | 1.627 | 0 | 24642 | 24642 |
| Data record 3 | 148.50 | 14.33 | 1174 | 600 | 399 | 4.129 | 1.338 | 0 | 24492 | 24492 |
| Data record 4 | 137.90 | 14.27 | 1169 | 599 | 400 | 4.216 | 1.392 | 0 | 24469 | 24469 |

The foregoing describes the terms used in this application, and the following describes an abnormality detection method provided in embodiments of this application.

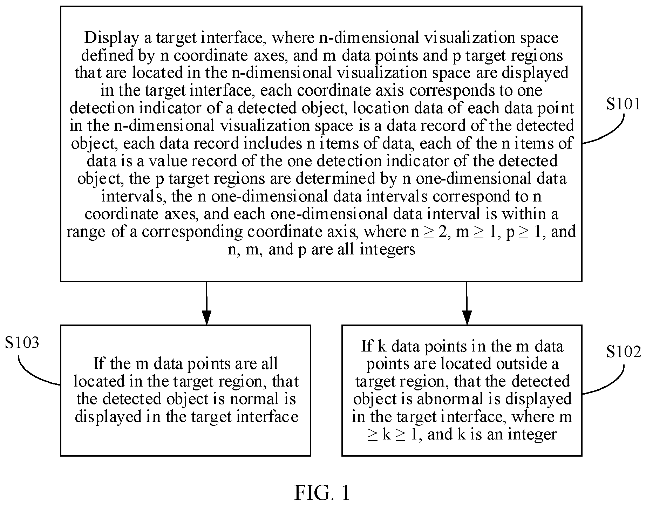

FIG. 1 is a flowchart of an abnormality detection method according to an embodiment of this application. The abnormality detection method is executed by an abnormality detection apparatus, and the abnormality detection apparatus performs abnormality detection on a detected object by executing the abnormality detection method. The abnormality detection apparatus may be a controller or a management device configured to manage the detected object. For example, the abnormality detection apparatus may be an intelligent terminal such as a personal computer (personal computer, PC), a mobile phone, a tablet computer, or the like, or the abnormality detection apparatus may be a server. Refer to FIG. 1. The method includes the following steps:

S101: Display a target interface, where n-dimensional visualization space defined by n coordinate axes, and m data points and p target regions that are located in the n-dimensional visualization space are displayed in the target interface, each coordinate axis corresponds to one detection indicator of a detected object, location data of each data point in the n-dimensional visualization space is a data record of the detected object, the data record includes n items of data, each of the n items of data is a value record of the one detection indicator of the detected object, the p target regions are determined by n one-dimensional data intervals, the n one-dimensional data intervals correspond to the n coordinate axes, and each one-dimensional data interval is within a range of a corresponding coordinate axis, where n ≥ 2, m ≥ 1, p ≥ 1, and n, m, and p are all integers.

The abnormality detection apparatus may determine n detection indicators of the detected object (in other words, determines indicators of the detected object need to be detected), obtain the n one-dimensional data intervals corresponding to the n detection indicators, and obtain m data records of the detected object. The target interface is displayed based on the n detection indicators of the detected object, the n one-dimensional data intervals corresponding to the n detection indicators, and the m data records. In this way, the n-dimensional visualization space defined by the n coordinate axes, and the m data points and the p target regions that are located in the n-dimensional visualization space are displayed in the target interface. The n coordinate axes of the n-dimensional visualization space are in a one-to-one correspondence with the n detection indicators of the detected object, the n coordinate axes are in a one-to-one correspondence with the n one-dimensional data intervals, and each one-dimensional data interval is within a range of a corresponding coordinate axis. Locations and occupied regions of the p target regions in the target interface are determined by the n-dimensional visualization space and the n one-dimensional data intervals. For example, the n one-dimensional data intervals correspond to n regions in the n-dimensional visualization space, and a target region is an overlapping region of the n regions. The m data records are in a one-to-one correspondence with the m data points in the n-dimensional visualization space, and the location data of each data point in the n-dimensional visualization space is a data record. In other words, each of the m data records is location data of a corresponding data point in the n-dimensional visualization space, and each data record indicates a location of the corresponding data point in the n-dimensional visualization space.

In an implementation of this embodiment of this application, the abnormality detection apparatus first displays the target interface, and after determining the n detection indicators of the detected object, the abnormality detection apparatus determines the n coordinate axes based on the n detection indicators, determines the n-dimensional visualization space based on the n coordinate axes, and displays the n-dimensional visualization space in the target interface. After obtaining the n one-dimensional data intervals corresponding to the n detection indicators of the detected object, the abnormality detection apparatus determines the n regions corresponding to the n one-dimensional data intervals in the n-dimensional visualization space, determines the target region based on the overlapping region of the n regions, displays the target region in the target interface, and enables the target region to be located in the n-dimensional visualization space. After obtaining the m data records of the detected object, the abnormality detection apparatus determines one data point in the n-dimensional visualization space based on each data record, displays the m data points in the target interface, and enables the m data points to be located in the n-dimensional visualization space. In other words, the abnormality detection apparatus first displays the target interface, then displays the n-dimensional visualization space in the target interface, then displays the target region in the target interface, and finally displays the m data points in the target interface.

In another implementation of this embodiment of this application, after determining the n detection indicators of the detected object, obtaining the n one-dimensional data intervals corresponding to the n detection indicators, and obtaining the m data records of the detected object, the abnormality detection apparatus determines the n coordinate axes based on the n detection indicators, determines the n-dimensional visualization space based on the n coordinate axes, determines the n regions corresponding to the n one-dimensional data intervals in the n-dimensional visualization space, determines the target region based on the overlapping region of the n regions, and determines one data point in the n-dimensional visualization space based on each data record, and then displays the target interface. In this way, the n-dimensional visualization space, the target region, and the m data points are displayed in the target interface, and both the target region and the m data points are located in the n-dimensional visualization space. In other words, when displaying the target interface, the abnormality detection apparatus displays the n-dimensional visualization space, the target region, and the m data points in the target interface.

In this embodiment of this application, the abnormality detection apparatus has a display component (for example, a display or a display screen), and the abnormality detection apparatus displays the target interface by using the display component. Alternatively, the abnormality detection apparatus does not have a display component, and the abnormality detection apparatus displays the target interface by using a display apparatus that has a display function and that is connected to the abnormality detection apparatus. This is not limited in this embodiment of this application.

The following describes the target interface, and the n-dimensional visualization space, the target region, and the data point that are located in the target interface with reference to examples.

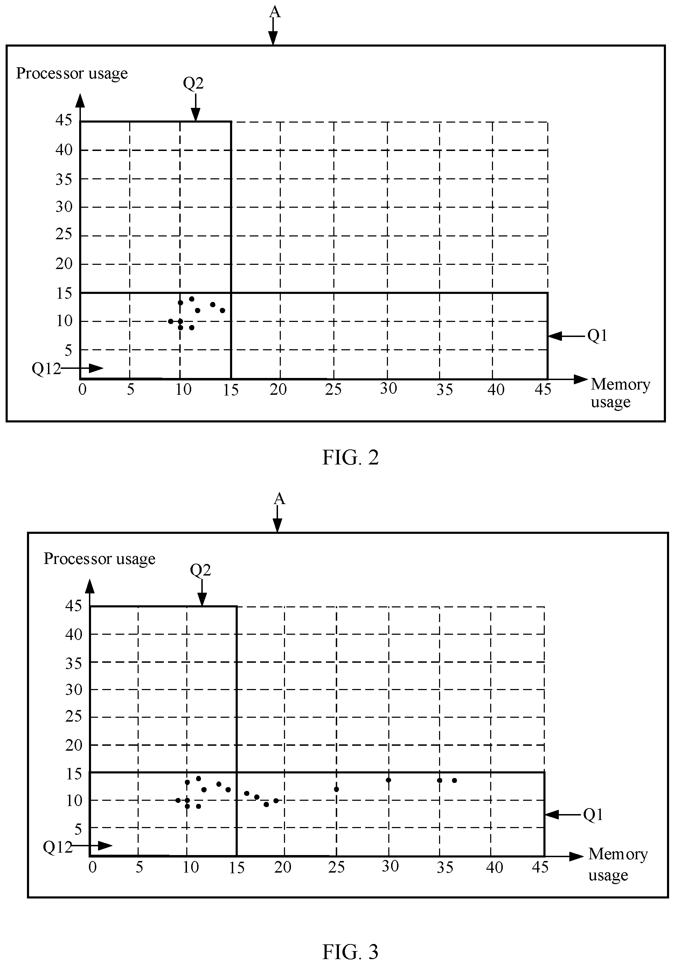

Example 1: n=2, the n detection indicators of the detected object include a processor usage and a memory usage, a one-dimensional data interval corresponding to the processor usage is [0, 15], and a one-dimensional data interval corresponding to the memory usage is [0, 15]. The obtained m data records of the detected object may be shown in Table 2, and the target interface displayed by the abnormality detection apparatus may be shown in FIG. 2. In both Table 2 and FIG. 2, m=9 is used as an example for description.

**Table 2**

| Data record | Processor usage (%) | Memory usage (%) |
|---|---|---|
| Data record 1 | 9 | 10 |
| Data record 2 | 10 | 9 |
| Data record 3 | 9 | 11 |
| Data record 4 | 10 | 10 |
| Data record 5 | 12 | 14 |
| Data record 6 | 13 | 13 |
| Data record 7 | 14 | 11 |
| Data record 8 | 12 | 12 |
| Data record 9 | 13 | 10 |

As shown in FIG. 2, n (n=2)-dimensional visualization space, a target region Q12, and m data points (where small black dots in FIG. 2 are the data points) corresponding to m (m=9) data records are displayed in a target interface A, n (n=2) coordinate axes in the n (n=2)-dimensional visualization space share an origin, a detection indicator corresponding to one coordinate axis (for example, a horizontal axis) in the n (n=2) coordinate axes is the memory usage, and a detection indicator corresponding to the other coordinate axis (for example, a vertical axis) is the processor usage. The target region Q12 is an overlapping region of a region Q1 and a region Q2. The region Q1 is a corresponding region of the one-dimensional data interval [0, 15] corresponding to the processor usage in the n (n=2)-dimensional visualization space, and the region Q2 is a corresponding region of the one-dimensional data interval [0, 15] corresponding to the memory usage in the n (n=2)-dimensional visualization space. The m (m=9) data points in FIG. 2 are in a one-to-one correspondence with the m (m=9) data records in Table 2. Each data record in Table 2 is location data of one data point in FIG. 2, and each data record in Table 2 indicates one data point in FIG. 2.

Example 2: n=2, the n detection indicators of the detected object include a processor usage and a memory usage, a one-dimensional data interval corresponding to the processor usage is [0, 15], and a one-dimensional data interval corresponding to the memory usage is [0, 15]. The obtained m data records of the detected object may be shown in Table 3, and the target interface displayed by the abnormality detection apparatus may be shown in FIG. 3. In both Table 3 and FIG. 3, m=17 is used as an example for description.

**Table 3**

| Data record | Processor usage (%) | Memory usage (%) |
|---|---|---|
| Data record 1 | 9 | 10 |
| Data record 2 | 10 | 9 |
| Data record 3 | 9 | 11 |
| Data record 4 | 10 | 10 |
| Data record 5 | 12 | 14 |
| Data record 6 | 13 | 13 |
| Data record 7 | 14 | 11 |
| Data record 8 | 12 | 12 |
| Data record 9 | 13 | 10 |
| Data record 10 | 12 | 16 |
| Data record 11 | 11 | 17 |
| Data record 12 | 9 | 18 |
| Data record 13 | 10 | 19 |
| Data record 14 | 13 | 25 |
| Data record 15 | 14 | 30 |
| Data record 16 | 14 | 37 |
| Data record 17 | 14 | 35 |

As shown in FIG. 3, n (n=2)-dimensional visualization space, a target region Q12, and m (m=17) data points (where small black dots in FIG. 3 are the data points) corresponding to m (m=17) data records are displayed in a target interface A, n (n=2) coordinate axes in the n (n=2)-dimensional visualization space share an origin, a detection indicator corresponding to one coordinate axis (for example, a horizontal axis) in the n (n=2) coordinate axes is the memory usage, and a detection indicator corresponding to the other coordinate axis (for example, a vertical axis) is the processor usage. The target region Q12 is an overlapping region of a region Q1 and a region Q2. The region Q1 is a corresponding region of the one-dimensional data interval [0, 15] corresponding to the processor usage in the n (n=2)-dimensional visualization space, and the region Q2 is a corresponding region of the one-dimensional data interval [0, 15] corresponding to the memory usage in the n (n=2)-dimensional visualization space. The m (m=17) data points in FIG. 3 are in a one-to-one correspondence with the m (m=17) data records in Table 3. Each data record in Table 3 is location data of one data point in FIG. 3, and each data record in Table 3 indicates one data point in FIG. 3.

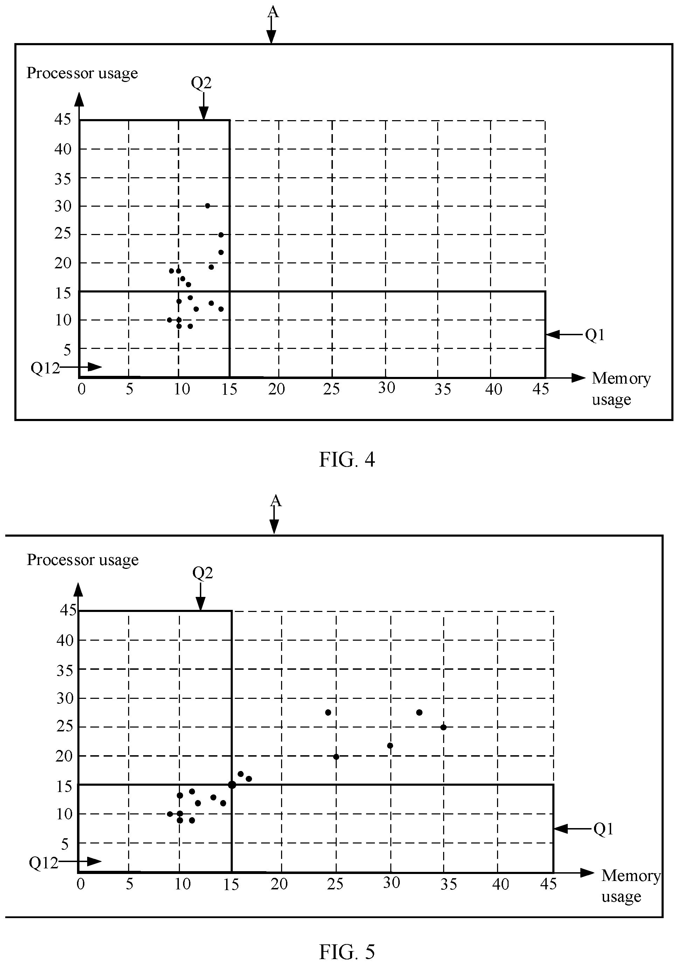

Example 3: n=2, the n detection indicators of the detected object include a processor usage and a memory usage, a one-dimensional data interval corresponding to the processor usage is [0, 15], and a one-dimensional data interval corresponding to the memory usage is [0, 15]. The obtained m data records of the detected object may be shown in Table 4, and the target interface displayed by the abnormality detection apparatus may be shown in FIG. 4. In both Table 4 and FIG. 4, m=17 is used as an example for description.

**Table 4**

| Data record | Processor usage (%) | Memory usage (%) |
|---|---|---|
| Data record 1 | 9 | 10 |
| Data record 2 | 10 | 9 |
| Data record 3 | 9 | 11 |
| Data record 4 | 10 | 10 |
| Data record 5 | 12 | 14 |
| Data record 6 | 13 | 13 |
| Data record 7 | 14 | 11 |
| Data record 8 | 12 | 12 |
| Data record 9 | 13 | 10 |
| Data record 10 | 16 | 12 |
| Data record 11 | 17 | 11 |
| Data record 12 | 18 | 9 |
| Data record 13 | 18 | 10 |
| Data record 14 | 19 | 13 |
| Data record 15 | 22 | 14 |
| Data record 16 | 25 | 14 |
| Data record 17 | 30 | 13 |

As shown in FIG. 4, n (n=2)-dimensional visualization space, a target region Q12, and m (m=17) data points (where small black dots in FIG. 4 are the data points) corresponding to m (m=17) data records are displayed in a target interface A, n (n=2) coordinate axes in the n (n=2)-dimensional visualization space share an origin, a detection indicator corresponding to one coordinate axis (for example, a horizontal axis) in the n (n=2) coordinate axes is the memory usage, and a detection indicator corresponding to the other coordinate axis (for example, a vertical axis) is the processor usage. The target region Q12 is an overlapping region of a region Q1 and a region Q2. The region Q1 is a corresponding region of the one-dimensional data interval [0, 15] corresponding to the processor usage in the n (n=2)-dimensional visualization space, and the region Q2 is a corresponding region of the one-dimensional data interval [0, 15] corresponding to the memory usage in the n (n=2)-dimensional visualization space. The m (m=17) data points in FIG. 4 are in a one-to-one correspondence with the m (m=17) data records in Table 4. Each data record in Table 4 is location data of one data point in FIG. 4, and each data record in Table 4 indicates one data point in FIG. 4.

Example 4: n=2, the n detection indicators of the detected object include a processor usage and a memory usage, a one-dimensional data interval corresponding to the processor usage is [0, 15], and a one-dimensional data interval corresponding to the memory usage is [0, 15]. The obtained m data records of the detected object may be shown in Table 5, and the target interface displayed by the abnormality detection apparatus may be shown in FIG. 5. In both Table 5 and FIG. 5, m=17 is used as an example for description.

**Table 5**

| Data record | Processor usage (%) | Memory usage (%) |
|---|---|---|
| Data record 1 | 9 | 10 |
| Data record 2 | 10 | 9 |
| Data record 3 | 9 | 11 |
| Data record 4 | 10 | 10 |
| Data record 5 | 12 | 14 |
| Data record 6 | 13 | 13 |
| Data record 7 | 14 | 11 |
| Data record 8 | 12 | 12 |
| Data record 9 | 13 | 10 |
| Data record 10 | 15 | 15 |
| Data record 11 | 16 | 17 |
| Data record 12 | 17 | 16 |
| Data record 13 | 20 | 25 |
| Data record 14 | 22 | 30 |
| Data record 15 | 25 | 35 |
| Data record 16 | 27 | 27 |
| Data record 17 | 27 | 24 |

As shown in FIG. 5, n (n=2)-dimensional visualization space, a target region Q12, and m (m=17) data points (where small black dots in FIG. 5 are the data points) corresponding to m (m=17) data records are displayed in a target interface A, n (n=2) coordinate axes in the n (n=2)-dimensional visualization space share an origin, a detection indicator corresponding to one coordinate axis (for example, a horizontal axis) in the n (n=2) coordinate axes is the memory usage, and a detection indicator corresponding to the other coordinate axis (for example, a vertical axis) is the processor usage. The target region Q12 is an overlapping region of a region Q1 and a region Q2. The region Q1 is a corresponding region of the one-dimensional data interval [0, 15] corresponding to the processor usage in the n (n=2)-dimensional visualization space, and the region Q2 is a corresponding region of the one-dimensional data interval [0, 15] corresponding to the amount of memory usage in the n (n=2)-dimensional visualization space. The m (m=17) data points in FIG. 5 are in a one-to-one correspondence with the m (m=17) data records in Table 5. Each data record in Table 5 is location data of one data point in FIG. 5, and each data record in Table 5 indicates one data point in FIG. 5.

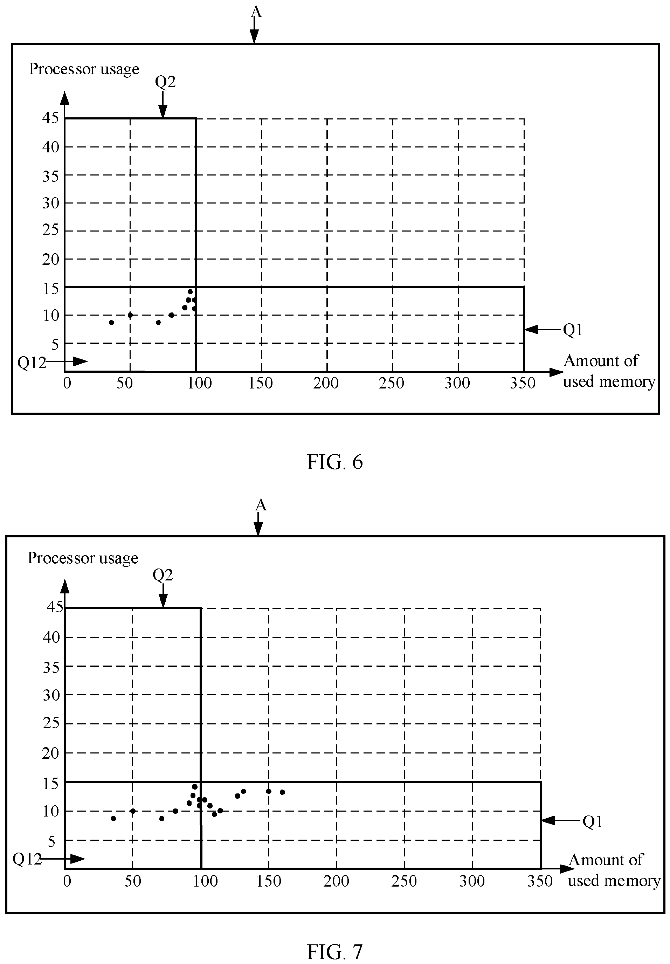

Example 5: n=2, the n detection indicators of the detected object include a processor usage and an amount of used memory, a one-dimensional data interval corresponding to the processor usage is [0, 15], and a one-dimensional data interval corresponding to the amount of used memory is [0, 100]. The obtained m data records of the detected object may be shown in Table 6, and the target interface displayed by the abnormality detection apparatus may be shown in FIG. 6. In both Table 6 and FIG. 6, m=9 is used as an example for description.

**Table 6**

| Data record | Processor usage (%) | Amount of used memory (MB) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |

Example 6: n=2, the n detection indicators of the detected object include a processor usage and an amount of used memory, a one-dimensional data interval corresponding to the processor usage is [0, 15], and a one-dimensional data interval corresponding to the amount of used memory is [0, 100]. The obtained m data records of the detected object may be shown in Table 7, and the target interface displayed by the abnormality detection apparatus may be shown in FIG. 7. In both Table 7 and FIG. 7, m=17 is used as an example for description.

**Table 7**

| Data record | Processor usage (%) | Amount of used memory (MB) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |
| Data record 10 | 12 | 101 |
| Data record 11 | 11 | 103 |
| Data record 12 | 9 | 105 |
| Data record 13 | 10 | 110 |
| Data record 14 | 13 | 126 |
| Data record 15 | 14 | 128 |
| Data record 16 | 14 | 150 |
| Data record 17 | 14 | 168 |

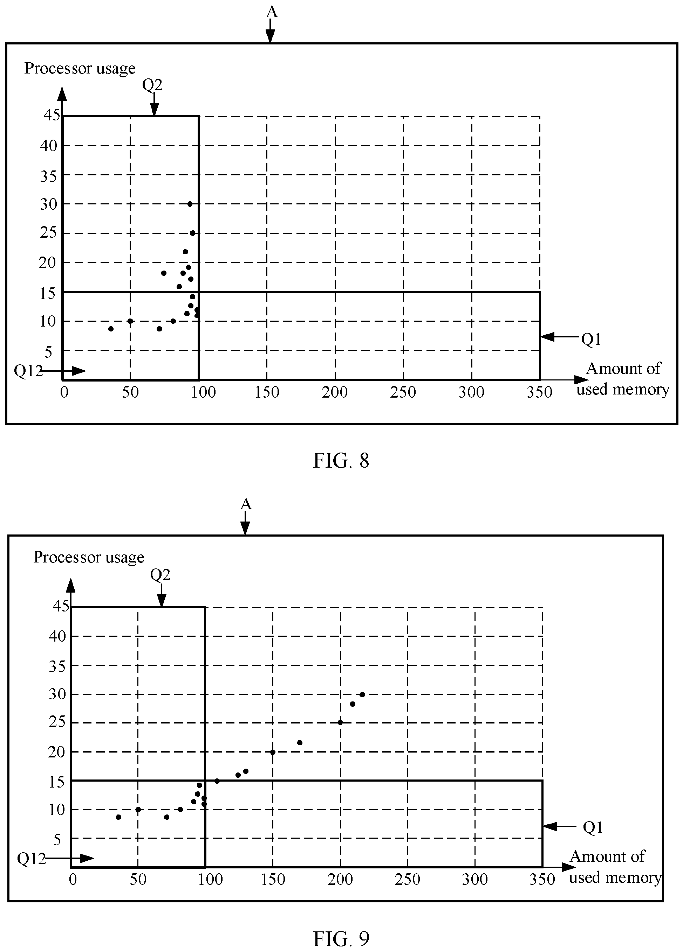

Example 7: n=2, the n detection indicators of the detected object include a processor usage and an amount of used memory, a one-dimensional data interval corresponding to the processor usage is [0, 15], and a one-dimensional data interval corresponding to the amount of used memory is [0, 100]. The obtained m data records of the detected object may be shown in Table 8, and the target interface displayed by the abnormality detection apparatus may be shown in FIG. 8. In both Table 8 and FIG. 8, m=17 is used as an example for description.

**Table 8**

| Data record | Processor usage (%) | Amount of used memory (MB) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |
| Data record 10 | 16 | 85 |
| Data record 11 | 17 | 95 |
| Data record 12 | 18 | 86 |
| Data record 13 | 18 | 75 |
| Data record 14 | 19 | 88 |
| Data record 15 | 22 | 86 |
| Data record 16 | 25 | 97 |
| Data record 17 | 30 | 96 |

Example 8: n=2, the n detection indicators of the detected object include a processor usage and an amount of used memory, a one-dimensional data interval corresponding to the processor usage is [0, 15], and a one-dimensional data interval corresponding to the amount of used memory is [0, 100]. The obtained m data records of the detected object may be shown in Table 9, and the target interface displayed by the abnormality detection apparatus may be shown in FIG. 9. In both Table 9 and FIG. 9, m=17 is used as an example for description.

**Table 9**

| Data record | Processor usage (%) | Amount of used memory (MB) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |
| Data record 10 | 15 | 109 |
| Data record 11 | 16 | 126 |
| Data record 12 | 17 | 128 |
| Data record 13 | 20 | 150 |
| Data record 14 | 22 | 170 |
| Data record 15 | 25 | 200 |
| Data record 16 | 27 | 215 |
| Data record 17 | 30 | 217 |

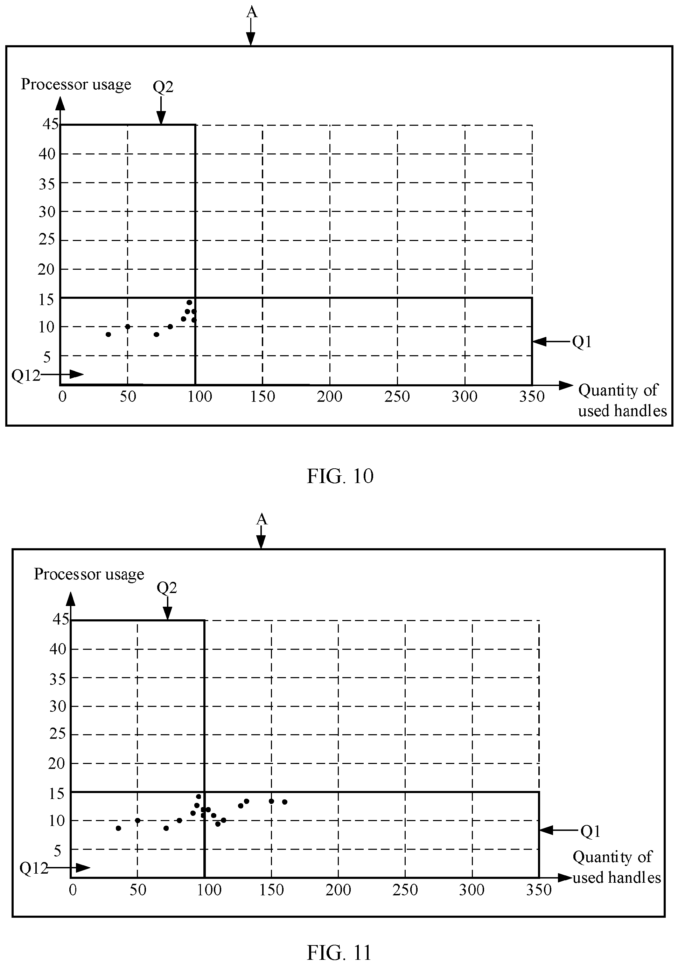

Example 9: n=2, the n detection indicators of the detected object include a processor usage and a quantity of used handles, a one-dimensional data interval corresponding to the processor usage is [0, 15], and a one-dimensional data interval corresponding to the quantity of used handles is [0, 100]. The obtained m data records of the detected object may be shown in Table 10, and the target interface displayed by the abnormality detection apparatus may be shown in FIG. 10. In both Table 10 and FIG. 10, m=9 is used as an example for description.

**Table 10**

| Data record | Processor usage (%) | Quantity of used handles (piece) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |

Example 10: n=2, the n detection indicators of the detected object include a processor usage and a quantity of used handles, a one-dimensional data interval corresponding to the processor usage is [0, 15], and a one-dimensional data interval corresponding to the quantity of used handles is [0, 100]. The obtained m data records of the detected object may be shown in Table 11, and the target interface displayed by the abnormality detection apparatus may be shown in FIG. 11. In both Table 11 and FIG. 11, m=17 is used as an example for description.

**Table 11**

| Data record | Processor usage (%) | Quantity of used handles (piece) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |
| Data record 10 | 12 | 101 |
| Data record 11 | 11 | 103 |
| Data record 12 | 9 | 105 |
| Data record 13 | 10 | 110 |
| Data record 14 | 13 | 126 |
| Data record 15 | 14 | 128 |
| Data record 16 | 14 | 150 |
| Data record 17 | 14 | 168 |

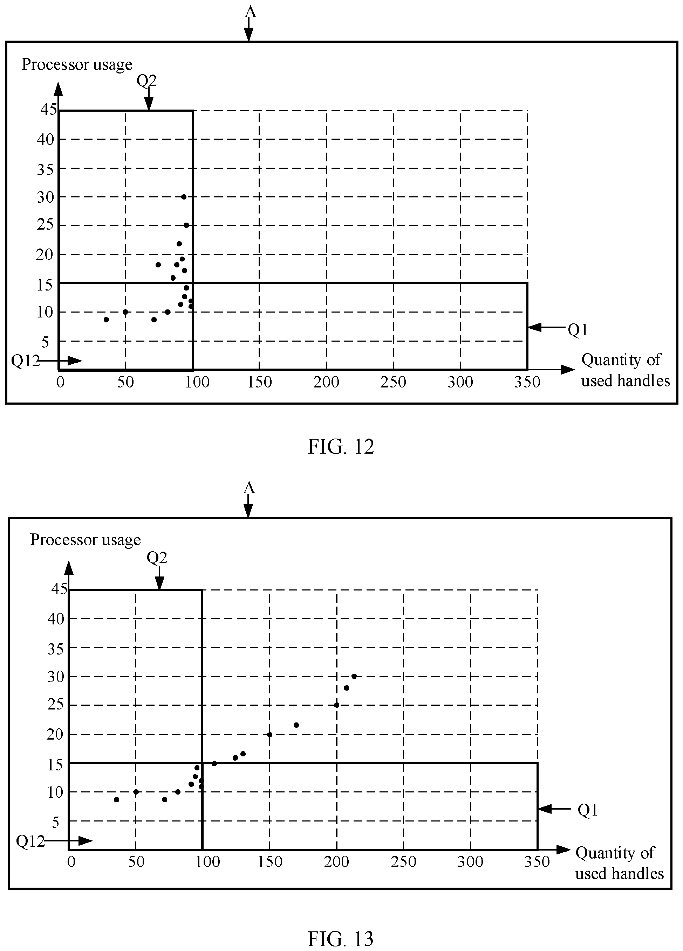

Example 11: n=2, the n detection indicators of the detected object include a processor usage and a quantity of used handles, a one-dimensional data interval corresponding to the processor usage is [0, 15], and a one-dimensional data interval corresponding to the quantity of used handles is [0, 100]. The obtained m data records of the detected object may be shown in Table 12, and the target interface displayed by the abnormality detection apparatus may be shown in FIG. 12. In both Table 12 and FIG. 12, m=17 is used as an example for description.

**Table 12**

| Data record | Processor usage (%) | Quantity of used handles (piece) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |
| Data record 10 | 16 | 85 |
| Data record 11 | 17 | 95 |
| Data record 12 | 18 | 86 |
| Data record 13 | 18 | 75 |
| Data record 14 | 19 | 88 |
| Data record 15 | 22 | 86 |
| Data record 16 | 25 | 97 |
| Data record 17 | 30 | 96 |

Example 12: n=2, the n detection indicators of the detected object include a processor usage and a quantity of used handles, a one-dimensional data interval corresponding to the processor usage is [0, 15], and a one-dimensional data interval corresponding to the quantity of used handles is [0, 100]. The obtained m data records of the detected object may be shown in Table 13, and the target interface displayed by the abnormality detection apparatus may be shown in FIG. 13. In both Table 13 and FIG. 13, m=17 is used as an example for description.

**Table 13**

| Data record | Processor usage (%) | Quantity of used handles (piece) |
|---|---|---|
| Data record 1 | 9 | 48 |
| Data record 2 | 10 | 50 |
| Data record 3 | 9 | 69 |
| Data record 4 | 10 | 75 |
| Data record 5 | 12 | 93 |
| Data record 6 | 13 | 95 |
| Data record 7 | 14 | 97 |
| Data record 8 | 12 | 98 |
| Data record 9 | 13 | 98 |
| Data record 10 | 15 | 109 |
| Data record 11 | 16 | 126 |
| Data record 12 | 17 | 128 |
| Data record 13 | 20 | 150 |
| Data record 14 | 22 | 170 |
| Data record 15 | 25 | 200 |
| Data record 16 | 27 | 215 |
| Data record 17 | 30 | 217 |

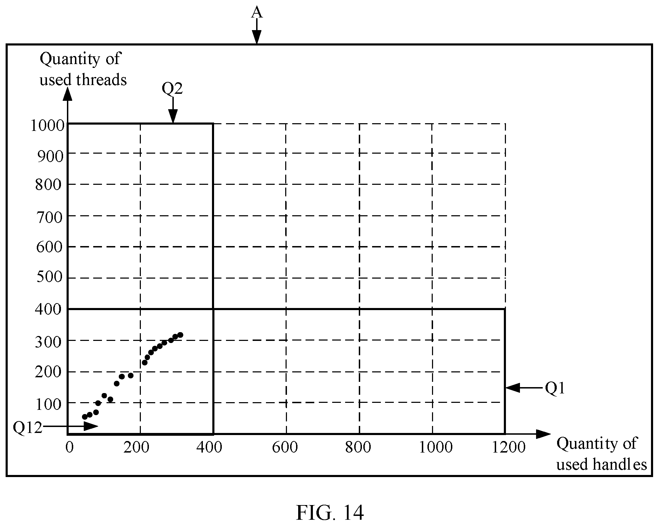

Example 13: n=2, the n detection indicators of the detected object include a quantity of used threads and a quantity of used handles, a one-dimensional data interval corresponding to the quantity of used threads is [0, 400], and a one-dimensional data interval corresponding to the quantity of used handles is [0, 400]. The obtained m data records of the detected object may be shown in Table 14, and the target interface displayed by the abnormality detection apparatus may be shown in FIG. 14. In both Table 14 and FIG. 14, m=17 is used as an example for description.

**Table 14**

| Data record | Quantity of used threads (piece) | Quantity of used handles (piece) |
|---|---|---|
| Data record 1 | 60 | 50 |
| Data record 2 | 65 | 60 |
| Data record 3 | 68 | 70 |
| Data record 4 | 100 | 85 |
| Data record 5 | 125 | 100 |
| Data record 6 | 115 | 110 |
| Data record 7 | 175 | 125 |
| Data record 8 | 198 | 178 |
| Data record 9 | 196 | 192 |
| Data record 10 | 255 | 225 |
| Data record 11 | 265 | 235 |
| Data record 12 | 269 | 240 |
| Data record 13 | 275 | 245 |
| Data record 14 | 295 | 265 |
| Data record 15 | 300 | 275 |
| Data record 16 | 300 | 300 |
| Data record 17 | 306 | 305 |

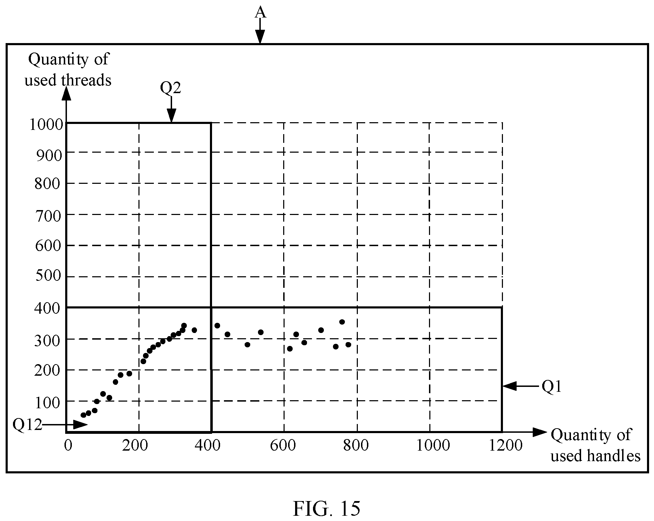

Example 14: n=2, the n detection indicators of the detected object include a quantity of used threads and a quantity of used handles, a one-dimensional data interval corresponding to the quantity of used threads is [0, 400], and a one-dimensional data interval corresponding to the quantity of used handles is [0, 400]. The obtained m data records of the detected object may be shown in Table 15, and the target interface displayed by the abnormality detection apparatus may be shown in FIG. 15. In both Table 15 and FIG. 15, m=32 is used as an example for description.

**Table 15**

| Data record | Quantity of used threads (piece) | Quantity of used handles (piece) |
|---|---|---|
| Data record 1 | 60 | 50 |
| Data record 2 | 65 | 60 |
| Data record 3 | 68 | 70 |
| Data record 4 | 100 | 85 |
| Data record 5 | 125 | 100 |
| Data record 6 | 115 | 110 |
| Data record 7 | 175 | 125 |
| Data record 8 | 198 | 178 |
| Data record 9 | 196 | 192 |
| Data record 10 | 255 | 225 |
| Data record 11 | 265 | 235 |
| Data record 12 | 269 | 240 |
| Data record 13 | 275 | 245 |
| Data record 14 | 295 | 265 |
| Data record 15 | 300 | 275 |
| Data record 16 | 300 | 300 |
| Data record 17 | 306 | 305 |
| Data record 18 | 319 | 316 |
| Data record 19 | 320 | 320 |
| Data record 20 | 355 | 335 |
| Data record 21 | 325 | 379 |
| Data record 22 | 345 | 423 |
| Data record 23 | 317 | 466 |
| Data record 24 | 292 | 510 |
| Data record 25 | 321 | 579 |
| Data record 26 | 279 | 602 |
| Data record 27 | 308 | 614 |
| Data record 28 | 295 | 638 |
| Data record 29 | 309 | 701 |
| Data record 30 | 282 | 725 |
| Data record 31 | 358 | 739 |
| Data record 32 | 287 | 743 |

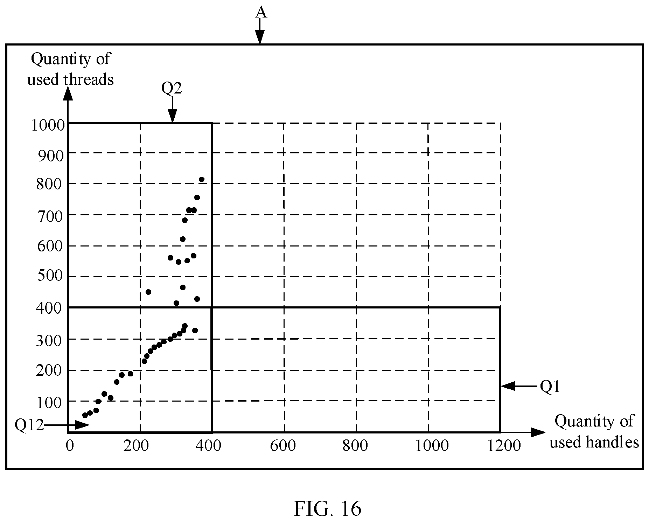

Example 15: n=2, the n detection indicators of the detected object include a quantity of used threads and a quantity of used handles, a one-dimensional data interval corresponding to the quantity of used threads is [0, 400], and a one-dimensional data interval corresponding to the quantity of used handles is [0, 400]. The obtained m data records of the detected object may be shown in Table 16, and the target interface displayed by the abnormality detection apparatus may be shown in FIG. 16. In both Table 16 and FIG. 16, m=32 is used as an example for description.

**Table 16**

| Data record | Quantity of used threads (piece) | Quantity of used handles (piece) |
|---|---|---|
| Data record 1 | 60 | 50 |
| Data record 2 | 65 | 60 |
| Data record 3 | 68 | 70 |
| Data record 4 | 100 | 85 |
| Data record 5 | 125 | 100 |
| Data record 6 | 115 | 110 |
| Data record 7 | 175 | 125 |
| Data record 8 | 198 | 178 |
| Data record 9 | 196 | 192 |
| Data record 10 | 255 | 225 |
| Data record 11 | 265 | 235 |
| Data record 12 | 269 | 240 |
| Data record 13 | 275 | 245 |
| Data record 14 | 295 | 265 |
| Data record 15 | 300 | 275 |
| Data record 16 | 300 | 300 |
| Data record 17 | 306 | 305 |
| Data record 18 | 319 | 316 |
| Data record 19 | 412 | 309 |
| Data record 20 | 451 | 267 |
| Data record 21 | 469 | 316 |
| Data record 22 | 411 | 370 |
| Data record 23 | 546 | 289 |
| Data record 24 | 544 | 325 |
| Data record 25 | 546 | 378 |
| Data record 26 | 581 | 320 |
| Data record 27 | 610 | 315 |
| Data record 28 | 692 | 328 |
| Data record 29 | 710 | 318 |
| Data record 30 | 710 | 326 |
| Data record 31 | 754 | 385 |
| Data record 32 | 816 | 371 |

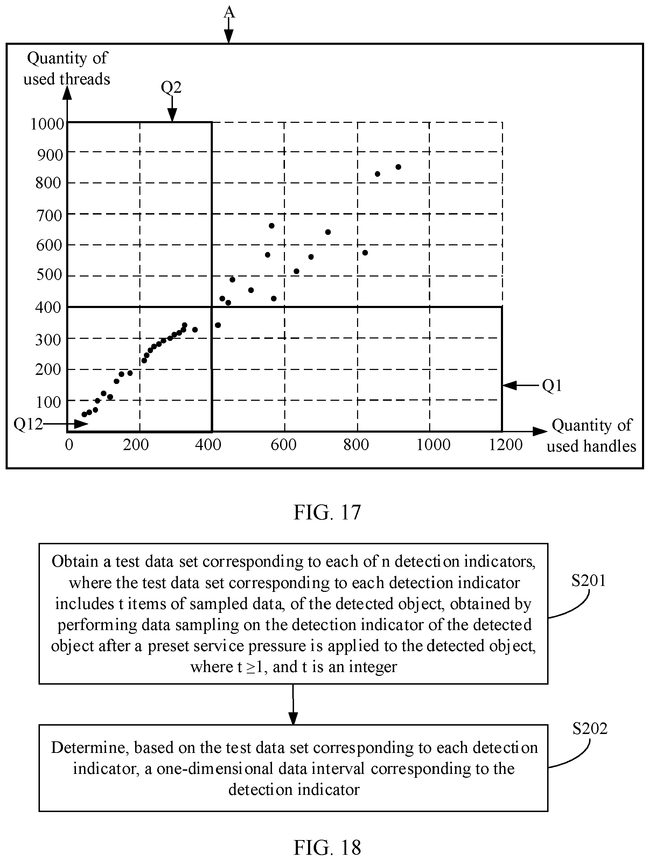

Example 16: n=2, the n detection indicators of the detected object include a quantity of used threads and a quantity of used handles, a one-dimensional data interval corresponding to the quantity of used threads is [0, 400], and a one-dimensional data interval corresponding to the quantity of used handles is [0, 400]. The obtained m data records of the detected object may be shown in Table 17, and the target interface displayed by the abnormality detection apparatus may be shown in FIG. 17. In both Table 17 and FIG. 17, m=32 is used as an example for description.

**Table 17**

| Data record | Quantity of used threads (piece) | Quantity of used handles (piece) |
|---|---|---|
| Data record 1 | 60 | 50 |
| Data record 2 | 65 | 60 |
| Data record 3 | 68 | 70 |
| Data record 4 | 100 | 85 |
| Data record 5 | 125 | 100 |
| Data record 6 | 115 | 110 |
| Data record 7 | 175 | 125 |
| Data record 8 | 198 | 178 |
| Data record 9 | 196 | 192 |
| Data record 10 | 255 | 225 |
| Data record 11 | 265 | 235 |
| Data record 12 | 269 | 240 |
| Data record 13 | 275 | 245 |
| Data record 14 | 295 | 265 |
| Data record 15 | 300 | 275 |
| Data record 16 | 300 | 300 |
| Data record 17 | 306 | 305 |
| Data record 18 | 319 | 316 |
| Data record 19 | 360 | 415 |
| Data record 20 | 420 | 421 |
| Data record 21 | 410 | 443 |
| Data record 22 | 496 | 445 |
| Data record 23 | 460 | 512 |
| Data record 24 | 418 | 581 |
| Data record 25 | 563 | 578 |
| Data record 26 | 687 | 585 |
| Data record 27 | 521 | 621 |
| Data record 28 | 578 | 630 |
| Data record 29 | 653 | 715 |
| Data record 30 | 586 | 813 |
| Data record 31 | 826 | 819 |
| Data record 32 | 850 | 850 |

For descriptions of FIG. 6 to FIG. 17, refer to the descriptions of FIG. 2 to FIG. 5. Details are not described herein again in this embodiment of this application.

It should be noted that, in Table 2 to Table 17, an example in which n-dimensional data record is a two-dimensional data record is used for description. Correspondingly, in FIG. 2 to FIG. 17, an example in which the n-dimensional visualization space is a two-dimensional visualization space is used for description. Table 2 to Table 17 and FIG. 2 to FIG. 17 are merely examples. In some embodiments, the n-dimensional data record may be a three-dimensional or more than three-dimensional data record, and the n-dimensional visualization space may be a three-dimensional or more than three-dimensional visualization space. The quantity of data records and the quantity of data points may also be other quantities. When the n-dimensional visualization space is three-dimensional or more than three-dimensional visualization space, the corresponding target region may be target space defined by the n one-dimensional data intervals. This is not limited in this embodiment of this application.

S 102: If k data points in the m data points are located outside a target region, that the detected object is abnormal is displayed in the target interface, where m ≥ k ≥ 1, and k is an integer.

Based on S 101, the abnormality detection apparatus may determine a location relationship between each of the m data points and the target region. After determining the location relationship between each of the m data points and the target region, the abnormality detection apparatus performs abnormality detection on the detected object based on the location relationship between each of the m data points and the target region. Optionally, the abnormality detection apparatus determines whether each of the m data points is located outside the target region. If the k data points in the m data points are located outside the target region, the abnormality detection apparatus determines that the detected object is abnormal, and the abnormality detection apparatus displays, in the target interface, that the detected object is abnormal. For example, the abnormality detection apparatus displays abnormality information of the detected object in the target interface, to display, in the target interface, that the detected object is abnormal. In an example, the abnormality detection apparatus displays an information prompt box in the target interface, and displays the abnormality information of the detected object in the information prompt box. This is not limited in this embodiment of this application.

In this embodiment of this application, m ≥ k ≥ 1, and k is an integer. To be specific, provided that one of the m data points is located outside the target region, the abnormality detection apparatus displays, in the target interface, that the detected object is abnormal. In an optional implementation, m ≥ k ≥ T, k is an integer, T represents a first threshold, and a value of T is determined based on a collection error of the data record of the detected object by the abnormality detection apparatus. In this way, when a quantity of data points that are located outside the target region and that are in the m data points is greater than or equal to T, the abnormality detection apparatus displays, in the target interface, that the detected object is abnormal. When the quantity of data points that are located outside the target region and that are in the m data points is less than T, the abnormality detection apparatus determines that the detected object is normal, and the abnormality detection apparatus does not display, in the target interface, that the detected object is abnormal. This helps avoid a case in which the abnormality detection apparatus determines that the detected object is abnormal due to the collection error of the data record of the detected object by the abnormality detection apparatus, and avoid affecting accuracy of a detection result of the detected object due to the collection error of the abnormality detection apparatus.

In this embodiment of this application, the n one-dimensional data intervals corresponding to the n detection indicators correspond to the n regions in the n-dimensional visualization space, and the target region is the overlapping region of the n regions. In S102, if determining that the k data points in the m data points are located outside an i^{th} region, the abnormality detection apparatus determines that an i^{th} detection indicator of the detected object is abnormal, and the abnormality detection apparatus displays, in the target interface, that the i^{th} detection indicator of the detected object is abnormal. The i^{th} region is a corresponding region of an i^{th} one-dimensional data interval in the n-dimensional visualization space, and the i^{th} one-dimensional data interval corresponds to the i^{th} detection indicator of the detected object. In an example, as shown in FIG. 2 to FIG. 5, the i^{th} detection indicator is the processor usage of the detected object, the i^{th} one-dimensional data interval is the one-dimensional data interval [0, 15], and the i^{th} region is a region Q1 corresponding to the one-dimensional data interval [0, 15] in the n-dimensional visualization space. Alternatively, the i^{th} detection indicator is the memory usage of the detected object, the i^{th} one-dimensional data interval is the one-dimensional data interval [0, 15], and the i^{th} region is a region Q2 corresponding to the one-dimensional data interval [0, 15] in the n-dimensional visualization space. In another example, as shown in FIG. 6 to FIG. 9, the i^{th} detection indicator is the processor usage of the detected object, the i^{th} one-dimensional data interval is the one-dimensional data interval [0, 15], and the i^{th} region is a region Q1 corresponding to the one-dimensional data interval [0, 15] in the n-dimensional visualization space. Alternatively, the i^{th} detection indicator is the amount of used memory of the detected object, the i^{th} one-dimensional data interval is the one-dimensional data interval [0, 100], and the i^{th} region is a region Q2 corresponding to the one-dimensional data interval [0, 100] in the n-dimensional visualization space. In still another example, as shown in FIG. 10 to FIG. 13, the i^{th} detection indicator is the processor usage of the detected object, the i^{th} one-dimensional data interval is the one-dimensional data interval [0, 15], and the i^{th} region is a region Q1 corresponding to the one-dimensional data interval [0, 15] in the n-dimensional visualization space. Alternatively, the i^{th} detection indicator is the quantity of used handles of the detected object, the i^{th} one-dimensional data interval is the one-dimensional data interval [0, 100], and the i^{th} region is a region Q2 corresponding to the one-dimensional data interval [0, 100] in the n-dimensional visualization space. In yet another example, as shown in FIG. 14 to FIG. 17, the i^{th} detection indicator is the quantity of used threads of the detected object, the i^{th} one-dimensional data interval is the one-dimensional data interval [0, 400], and the i^{th} region is a region Q1 corresponding to the one-dimensional data interval [0, 400] in the n-dimensional visualization space. Alternatively, the i^{th} detection indicator is the quantity of used handles of the detected object, the i^{th} one-dimensional data interval is the one-dimensional data interval [0, 400], and the i^{th} region is a region Q2 corresponding to the one-dimensional data interval [0, 400] in the n-dimensional visualization space.

For example, as shown in FIG. 3, n=2, the i^{th} (for example, i=1) detection indicator is the processor usage of the detected object, and an (i+1)^{th} detection indicator is the memory usage of the detected object. The i^{th} one-dimensional data interval is the one-dimensional data interval [0, 15], and an (i+1^{th} one-dimensional data interval is the one-dimensional data interval [0, 15]. The i^{th} region is the region Q1 corresponding to the i^{th} one-dimensional data interval [0, 15] in the n-dimensional visualization space, and an (i+1^{th} region is the region Q2 corresponding to the (i+1^{th} one-dimensional data interval [0, 15] in the n-dimensional visualization space. Because k (k=8) data points in the m (m=17) data points are located outside the region Q2, the abnormality detection apparatus determines that the memory usage of the detected object (namely, the (i+1)^{th} detection indicator) is abnormal. Because the m (m=17) data points are all located outside the region Q1, the abnormality detection apparatus determines that the processor usage of the detected object (namely, the i^{th} detection indicator) is normal. Explanations of other accompanying drawings are similar, and details are not described herein again.

Optionally, the n coordinate axes of the n-dimensional visualization space correspond to the n detection indicators of the detected object, and the n detection indicators include the processor usage and the memory usage. In the m data records of the detected object, each data record includes the processor usage of detected object and the memory usage of the detected object. The following describes, by using an example in which each of the m data records includes the processor usage of the detected object and the memory usage of the detected object, the abnormality detection apparatus displays related content, in the target interface, that the i^{th} detection indicator of the detected object is abnormal.

In a possible case, if the k data points in the m data points are located outside a first region (for example, the i^{th} region), the abnormality detection apparatus displays, in the target interface, that the processor usage of the detected object (for example, the i^{th} detection indicator) is abnormal. The first region (for example, the i^{th} region) is a corresponding region of a first one-dimensional data interval (for example, the i^{th} one-dimensional data interval) in the n-dimensional visualization space, and the first one-dimensional data interval corresponds to the processor usage.

For example, as shown in FIG. 4, the first one-dimensional data interval is the one-dimensional data interval [0, 15] corresponding to the processor usage, and the first region is the region Q1. In FIG. 4, k (k=8) data points in the m (m=17) data points are located outside the first region (namely, the region Q1), and the abnormality detection apparatus displays, in the target interface, that the processor usage of the detected object is abnormal.

For example, the detected object is a process. The abnormality detection apparatus analyzes the m (m=17) data points shown in FIG. 4, and determines that the processor usage of the detected object shows an increasing trend, and the abnormality detection apparatus determines that the processor usage of the detected object is continuously increasing. In this case, it is determined that code implementation of the detected object has faults such as deep recursion or infinite loop, and the abnormality detection apparatus displays, in the target interface, that the code implementation of the detected object has faults such as deep recursion or infinite loop.

In another possible case, if the k data points in the m data points are located outside a second region (for example, the (i+1^{th} region), the abnormality detection apparatus displays, in the target interface, that the memory usage of the detected object (for example, the (i+1)^{th} detection indicator) is abnormal. The second region (for example, the (i+1^{th} region) is a corresponding region of a second one-dimensional data interval (for example, the (i+1^{th} one-dimensional data interval) in the n-dimensional visualization space, and the second one-dimensional data interval corresponds to the memory usage.

For example, as shown in FIG. 3, the second one-dimensional data interval is the one-dimensional data interval [0, 15] corresponding to the memory usage, and the second region is the region Q2. In FIG. 3, k (k=8) data points in the m (m=17) data points are located outside the second region (namely, the region Q2), and the abnormality detection apparatus displays, in the target interface, that the memory usage of the detected object is abnormal.

For example, the detected object is a process. The abnormality detection apparatus analyzes the m (m=17) data points shown in FIG. 3, and determines that memory usage of the detected object shows an increasing trend, and the abnormality detection apparatus determines that the memory usage of the detected object is continuously increasing. In this case, it is determined that memory leakage occurs on the detected object, and the abnormality detection apparatus displays, in the target interface, that the memory leakage occurs on the detected object.

In still another possible case, if the k data points in the m data points are located outside a first region (for example, the i^{th} region) and outside a second region (for example, the (i+1)^{th} region), the abnormality detection apparatus displays, in the target interface, that a processing capability of the detected object is abnormal. The first region (for example, the i^{th} region) is a corresponding region of a first one-dimensional data interval (for example, the i^{th} one-dimensional data interval) in the n-dimensional visualization space, and the first one-dimensional data interval corresponds to the processor usage. The second region (for example, the (i+1^{th} region) is a corresponding region of a second one-dimensional data interval (for example, the (i+1^{th} one-dimensional data interval) in the n-dimensional visualization space, and the second one-dimensional data interval corresponds to the memory usage.

For example, as shown in FIG. 5, the first one-dimensional data interval is the one-dimensional data interval [0, 15] corresponding to the processor usage, the first region is the region Q1, the second one-dimensional data interval is the one-dimensional data interval [0, 15] corresponding to the memory usage, and the second region is the region Q2. In FIG. 5, k (k=8) data points in the m (m=17) data points are located outside the first region (namely, the region Q1) and outside the second region (namely, the region Q2), and the abnormality detection apparatus displays, in the target interface, that the processing capability of the detected object is abnormal.

For example, the detected object is a process. The abnormality detection apparatus analyzes the m (m=17) data points shown in FIG. 5, and determines that both the processor usage and the memory usage of the detected object show an increasing trend, and the abnormality detection apparatus determines that a quantity of tasks currently executed by the detected object exceeds the processing capability of the detected object, and the processing capability of the detected object encounters a bottleneck. In this case, the abnormality detection apparatus displays, in the target interface, that the processing capability of the detected object is abnormal.

The foregoing describes, with reference to FIG. 3 to FIG. 5, the abnormality detection apparatus displays related content that the i^{th} detection indicator of the detected object is abnormal. The following describes, with reference to FIG. 7 to FIG. 9, FIG. 11 to FIG. 13, and FIG. 15 to FIG. 17, the abnormality detection apparatus displays related content that the i^{th} detection indicator of the detected object is abnormal.

As shown in FIG. 7 to FIG. 9, the region Q1 is the corresponding region of the one-dimensional data interval [0, 15] corresponding to the processor usage in the n-dimensional visualization space, and the region Q2 is the corresponding region of the one-dimensional data interval [0, 100] corresponding to the amount of used memory in the n-dimensional visualization space. As shown in FIG. 7, k (k=8) data points in the m (m=17) data points are located outside the region Q2. In this case, the abnormality detection apparatus displays, in the target interface, that the amount of used memory of the detected object is abnormal (for example, memory leakage occurs on the detected object). As shown in FIG. 8, k (k=8) data points in the m (m=17) data points are located outside the region Q1. In this case, the abnormality detection apparatus displays, in the target interface, that the processor usage of the detected object is abnormal (for example, code implementation of the detected object has faults such as deep recursion or infinite loop). As shown in FIG. 9, k (k=8) data points in the m (m=17) data points are located outside the region Q1 and outside the region Q2. In this case, the abnormality detection apparatus displays, in the target interface, that a processing capability of the detected object is abnormal (for example, a quantity of tasks currently executed by the detected object exceeds the processing capability of the detected object, and the processing capability of the detected object encounters a bottleneck).

As shown in FIG. 11 to FIG. 13, the region Q1 is the corresponding region of the one-dimensional data interval [0, 15] corresponding to the processor usage in the n-dimensional visualization space, and the region Q2 is the corresponding region of the one-dimensional data interval [0, 100] corresponding to the quantity of used handles in the n-dimensional visualization space. As shown in FIG. 11, k (k=8) data points in the m (m=17) data points are located outside the region Q2. In this case, the abnormality detection apparatus displays, in the target interface, that the quantity of used handles of the detected object is abnormal (for example, handle leakage occurs on the detected object). As shown in FIG. 12, k (k=8) data points in the m (m=17) data points are located outside the region Q1. In this case, the abnormality detection apparatus displays, in the target interface, that the processor usage of the detected object is abnormal (for example, code implementation of the detected object has faults such as deep recursion or infinite loop). As shown in FIG. 13, k (k=8) data points in the m (m=17) data points are located outside the region Q1 and outside the region Q2. In this case, the abnormality detection apparatus displays, in the target interface, that a processing capability of the detected object is abnormal (for example, a quantity of tasks currently executed by the detected object exceeds the processing capability of the detected object, and the processing capability of the detected object encounters a bottleneck).

As shown in FIG. 15 to FIG. 17, the region Q1 is the corresponding region of the one-dimensional data interval [0, 400] corresponding to the quantity of used threads in the n-dimensional visualization space, and the region Q2 is the corresponding region of the one-dimensional data interval [0, 400] corresponding to the quantity of used handles in the n-dimensional visualization space. As shown in FIG. 15, k (k=11) data points in the m (m=32) data points are located outside the region Q2. In this case, the abnormality detection apparatus displays, in the target interface, that the quantity of used handles of the detected object is abnormal (for example, handle leakage occurs on the detected object). As shown in FIG. 16, k (k=14) data points in the m (m=32) data points are located outside the region Q1. In this case, the abnormality detection apparatus displays, in the target interface, that a thread of the detected object is abnormal (for example, thread leakage or thread blocking occurs on the detected object). As shown in FIG. 17, k (k=13) data points in the m (m=32) data points are located outside the region Q1 and outside the region Q2. In this case, the abnormality detection apparatus displays, in the target interface, that an amount of current message request and a processing capability of the detected object are oversaturated. The detected object may encounter attacks or message storms.

After the abnormality detection apparatus displays, in the target interface, that the detected object is abnormal, the abnormality detection apparatus may intervene in the detected object. For example, the abnormality detection apparatus sends an alarm prompt, in this case, monitoring personnel perform corresponding processing based on the alarm prompt. For example, the abnormality detection apparatus sends the alarm prompt after that the processing capability of the detected object is abnormal is displayed in the target interface, and the monitoring personnel restart, based on the alarm prompt, a computer in which the detected object is located or switch to a standby computer for running. For another example, for FIG. 17, if data points corresponding to data records obtained by the abnormality detection apparatus by continuously performing data sampling on the detected object for a plurality of times are all located outside the region Q1 and outside the region Q2, the abnormality detection apparatus sends the alarm prompt. The monitoring personnel implement traffic limiting and circuit breaker on the detected object based on the alarm prompt to prevent service breakdown of the detected object.

S103: If the m data points are all located in the target region, that the detected object is normal is displayed in the target interface.

If the abnormality detection apparatus determines that the m data points are all located in the target region, the abnormality detection apparatus displays, in the target interface, that the detected object is normal. For example, the abnormality detection apparatus displays normality information of the detected object in the target interface, to display, in the target interface, that the detected object is normal. In an example, the abnormality detection apparatus displays an information prompt box in the target interface, and displays the normality information of the detected object in the information prompt box. This is not limited in this embodiment of this application.

For example, as shown in FIG. 2, FIG. 6, FIG. 10, or FIG. 14, a target region Q12 is an overlapping region of the region Q1 and the region Q2, and the m data points corresponding to the m data records of the detected object are all located in the target region Q12. The abnormality detection apparatus may display, in the target interface, that the detected object is normal or that the detected object is in an idle state. For example, the abnormality detection apparatus displays information "The process X is normal and no additional processing is required" in the target interface.

In conclusion, according to the abnormality detection method provided in this embodiment of this application, n-dimensional visualization space defined by n coordinate axes, and m data points and p target regions that are located in the n-dimensional visualization space are displayed in the target interface displayed by the abnormality detection apparatus, each coordinate axis corresponds to one detection indicator of a detected object, location data of each data point in the n-dimensional visualization space is a data record of the detected object, the data record includes n items of data, each of the n items of data is a value record of the one detection indicator of the detected object, the p target regions are determined by n one-dimensional data intervals, the n one-dimensional data intervals correspond to the n coordinate axes, each one-dimensional data interval is within a range of a corresponding coordinate axis; and if k data points in the m data points are located outside a target region, and the abnormality detection apparatus displays, in the target interface, that the detected object is abnormal. According to the technical solutions provided in this embodiment of this application, the abnormality detection apparatus performs abnormality detection on the detected object by combining data of n dimensions (the data of the n dimensions forms a data record) of the detected object by using a same algorithm. This helps improve accuracy and flexibility of abnormality detection on the detected object. In addition, the abnormality detection apparatus displays, in the n-dimensional visualization space by using a data point in combination with a data region (for example, a target region), a data point that is for representing a data record of the detected object. In this case, a running status of the detected object is visualized, and a user can intuitively understand the running status of the detected object.

Most of the current abnormality detection solutions perform abnormality detection on a detected object based on one-dimensional data of a time series, and a detection process is performed strictly based on the time series. In addition, because abnormality detection is performed based on the one-dimensional data, detection accuracy and flexibility are low. According to the abnormality detection method provided in this embodiment of this application, abnormality detection is performed on a detected object based on multi-dimensional data (for example, a data record in this application) without a time dimension. A time dimension does not need to be considered in a detection process. In addition, because abnormality detection is performed based on the multi-dimensional data, detection accuracy and flexibility are high. In addition, this embodiment of this application helps reduce resource consumption of an abnormality detection algorithm, and improves detection efficiency. For example, a two-dimensional data record is used as an example. Based on the abnormality detection method in this embodiment of this application, four states (including 1 normal state and 3 abnormal states) of the detected object may be comprehensively detected, and an overall resource consumed by the algorithm is 1/4 of a resource consumed by a conventional algorithm.

In this embodiment of this application, the n one-dimensional data intervals correspond to the n detection indicators of the detected object. Before displaying the target interface, the abnormality detection apparatus may obtain the one-dimensional data interval corresponding to each of n detection indicators. In other words, the abnormality detection apparatus obtains n one-to-one one-dimensional data intervals corresponding to the n detection indicators.

The following describes a process in which the abnormality detection apparatus obtains a one-dimensional data interval.

FIG. 18 is a flowchart of obtaining a one-dimensional data interval according to an embodiment of this application. Refer to FIG. 18. The method includes the following steps:

S201: A test data set corresponding to each of n detection indicators is obtained, where the test data set corresponding to each detection indicator includes t items of sampled data, of the detected object, obtained by performing data sampling on the detection indicator of the detected object after a preset service pressure is applied to the detected object, where t ≥ 1, and t is an integer.

The abnormality detection apparatus may obtain a test data set corresponding to each of n detection indicators of the detected object, where the test data set corresponding to each detection indicator includes t items of sampled data, of the detected object, obtained by performing data sampling on the detection indicator of the detected object after a preset service pressure is applied to the detected object. For example, the preset service pressure may be 1.5 times a normal service pressure of the detected object, and the normal service pressure of the detected object refers to a maximum service pressure of the detected object in a normal working state. The t sampling moments may be distributed within w consecutive days. For example, w is equal to 15.

For example, after applying preset service pressure to the detected object, the abnormality detection apparatus performs data sampling on each detection indicator of the detected object at t sampling moments, to obtain t items of sampled data corresponding to each detection indicator of the detected object, and determines a set formed by t items of sampled data corresponding to each detection indicator as a test data set corresponding to the detection indicator. Optionally, after applying preset service pressure to the detected object and inputting a preset amount of abnormality into the detected object, the abnormality detection apparatus performs data sampling on each detection indicator of the detected object at t sampling moments. An abnormality of the preset amount is, for example, five percent abnormality, and the five percent abnormality refers to, for example, a percentage of a quantity of tasks that fail to be executed by the detected object in the specified duration to a total quantity of tasks executed by the detected object (a sum of a quantity of tasks that fail to be executed by the detected object and a quantity of tasks that are successfully executed).

S202: Based on the test data set corresponding to each detection indicator, a one-dimensional data interval corresponding to the detection indicator is determined.

After obtaining the test data set corresponding to each of n detection indicators of the detected object, the abnormality detection apparatus determines, based on the test data set corresponding to each detection indicator of the detected object, the one-dimensional data interval corresponding to the detection indicator.

In this embodiment of this application, S202 may include the following two possible implementations:

In a first implementation of S202: the abnormality detection apparatus determines a maximum value of t items of sampled data in the test data set corresponding to each detection indicator as an upper limit value of a one-dimensional data interval corresponding to the detection indicator; or the abnormality detection apparatus determines that a value of an upper quartile in t items of sampled data in a test data set corresponding to each detection indicator as an upper limit value of a one-dimensional data interval corresponding to the detection indicator; or the abnormality detection apparatus determines, based on an average value and a variance of t items of sampled data in a test data set corresponding to each detection indicator, an upper limit value of a one-dimensional data interval corresponding to the detection indicator. Further, the abnormality detection apparatus determines a minimum value of t items of sampled data in the test data set corresponding to each detection indicator as a lower limit value of a one-dimensional data interval corresponding to the detection indicator; or the abnormality detection apparatus determines a value of a lower quartile in t items of sampled data in a test data set corresponding to each detection indicator as a lower limit value of a one-dimensional data interval corresponding to the detection indicator; or the abnormality detection apparatus determines, based on an average value and a variance of t items of sampled data in a test data set corresponding to each detection indicator, a lower limit value of a one-dimensional data interval corresponding to the detection indicator; or the abnormality detection apparatus determines that the lower limit value of the one-dimensional data interval corresponding to the detection indicator is 0.

For example, the abnormality detection apparatus determines, based on the t items of sampled data in the test data set corresponding to each detection indicator by using a formula Lᵤ=Dₘₐₓ, Lᵤ=D_{Q1}, or Lᵤ=1.35 × (µ+3σ), the upper limit value of the one-dimensional data interval corresponding to the detection indicator; the abnormality detection apparatus determines, based on the t items of sampled data in the test data set corresponding to each detection indicator, an upper limit value of the one-dimensional data interval corresponding to the detection indicator is determined by using a formula L_{w}=Dₘᵢₙ, L_{w}D_{Q2}, L_{w}=1.35 × (µ-3σ), or L_{w}=0. Lᵤ represents an upper limit value of the one-dimensional data interval corresponding to the detection indicator, L_{w} represents a lower limit value of the one-dimensional data interval corresponding to the detection indicator, Dₘₐₓ represents a maximum value in the t items of sampled data, Dₘᵢₙ represents a minimum value in the t items of sampled data, D_{Q1} represents a value of an upper quartile in the t items of sampled data, D_{Q2} represents a value of a lower quartile in the t items of sampled data, µ represents an average value of the t items of sampled data, and σ represents the variance of the t items of sampled data.

In a second implementation of S202: the abnormality detection apparatus inputs t items of sampled data in a test data set corresponding to each detection indicator into a first model corresponding to the detection indicator, in this way, the first model performs calculation based on the t item of sampled data to obtain the upper limit value of the one-dimensional data interval corresponding to the detection indicator. The abnormality detection apparatus inputs t items of sampled data in the test data set corresponding to each detection indicator into a second model corresponding to the detection indicator, in this way, the second model performs calculation based on the t items of sampled data to obtain a lower limit value of a one-dimensional data interval corresponding to the detection indicator. Alternatively, the abnormality detection apparatus determines that the lower limit value of the one-dimensional data interval corresponding to the detection indicator is 0.

Both the first model and the second model may be a GAN model based on a generative adversarial network (generative adversarial network, GAN). Before performing the second implementation of S202, the abnormality detection apparatus may obtain the first model and the second model corresponding to each detection indicator. For example, the abnormality detection apparatus obtains the first model and the second model from another device (the first model and the second model may be trained by another device), or the abnormality detection apparatus trains the first model and the second model based on the training data set.

In this embodiment of this application, an example in which the abnormality detection apparatus trains, based on the training data set (for ease of description, the training data set corresponding to the first detection indicator is referred to as a first training data set below) corresponding to the first detection indicator, the first model and the second model corresponding to the first detection indicator is used for description. The first training data set may include a plurality of items of training data and an expected upper limit value and an expected lower limit value corresponding to each item of training data, and each item of training data may be obtained by sampling the first detection indicator. The expected upper limit value and the expected lower limit value corresponding to each item of training data may be manually labeled on the training data.

A process in which the abnormality detection apparatus trains a first model corresponding to the first detection indicator may include: The abnormality detection apparatus inputs the first training data in the first training data set into a first initial model, in this way, the first initial model performs calculation to obtain an actual upper limit value based on the first training data; then, the abnormality detection apparatus adjusts the model parameter of the first initial model based on the expected upper limit value and the actual upper limit value corresponding to the first training data, and inputs the first training data into the first initial model that the model parameter is adjusted and then performs calculation again, to obtain a re-calculated actual upper limit value; then, the abnormality detection apparatus adjusts the model parameter again based on the expected upper limit value corresponding to the first training data and the actual upper limit value that is obtained through calculation again, performs calculation again, and repeatedly performs the foregoing process of adjusting the model parameter to inputting the first training data to perform model training, until a difference between an actual upper limit value obtained through calculation and an expected upper limit value corresponding to the first training data meets a preset condition. The abnormality detection apparatus determines a model that meets a preset condition as the first model corresponding to the first detection indicator. The preset condition may be a condition indicating that a difference between the actual upper limit value and the expected upper limit value is small. For example, the preset condition may be that a difference between the actual upper limit value and the expected upper limit value is less than a preset difference.

A process in which the abnormality detection apparatus trains a second model corresponding to the first detection indicator may include: The abnormality detection apparatus inputs the second training data in the first training data set into a second initial model, in this way, the second initial model performs calculation to obtain an actual lower limit value based on the second training data; then, the abnormality detection apparatus adjusts the model parameter of the second initial model based on the expected lower limit value and the actual lower limit value corresponding to the second training data, and inputs the second training data into the second initial model that the model parameter are adjusted and then performs calculation again, to obtain a re-calculated actual lower limit value; then, the abnormality detection apparatus adjusts the model parameter again based on the expected lower limit value corresponding to the second training data and the actual lower limit value that is obtained through calculation again, performs calculation again, and repeatedly performs the foregoing process of adjusting the model parameter to inputting the second training data to perform model training, until a difference between an actual lower limit value obtained through calculation and an expected lower limit value corresponding to the second training data meets a preset condition. The abnormality detection apparatus determines a model that meets a preset condition as the second model corresponding to the second detection indicator. The preset condition may be a condition indicating that a difference between the actual lower limit value and the expected lower limit value is small. For example, the preset condition may be that a difference between the actual lower limit value and the expected lower limit value is less than a preset difference.

In the foregoing description, the first training data and the second training data may be same training data or different training data, and the first initial model and the second initial model may be GAN models. The description of a model training process in this embodiment of this application is merely an example. The abnormality detection apparatus may train the first model and the second model by using a large amount of training data. In this way, calculation precision and calculation accuracy of the first model and the second model that are finally obtained through training can be ensured. In addition, in this embodiment of this application, for example, different detection indicators correspond to different first models and different detection indicators correspond to different second models. In some implementation scenarios, different detection indicators correspond to a same first model, and different detection indicators correspond to a same second model. This is not limited in this embodiment of this application.

Based on the method provided in S202, the upper limit value and/or the lower limit value calculated by the abnormality detection apparatus may include a decimal. In this case, the abnormality detection apparatus may round the calculated upper limit value and/or the calculated lower limit value based on an actual requirement to determine the final upper limit value and/or the lower limit value. For example, for detection indicators such as the quantity of used handles and the quantity of used threads, the abnormality detection apparatus may round up the calculated upper limit value and/or the calculated lower limit value. Optionally, the abnormality detection apparatus may not round the calculated upper limit value and/or the calculated lower limit value, but directly determine the calculated upper limit value and/or the calculated lower limit value as the final upper limit value and/or the final lower limit value. For example, for detection indicators such as a processor usage, memory usage, an amount of read data, an amount of written data, and an amount of read/written data, the abnormality detection apparatus may not round up the calculated upper limit value and/or the calculated lower limit value. In some possible implementations, the abnormality detection apparatus may adjust the upper limit and/or the lower limit calculated based on the method provided in S202 to determine the final upper limit and/or the lower limit. For example, the abnormality detection apparatus adjusts, based on an algorithm error and based on a fault tolerance ratio, the upper limit value and/or the lower limit value that are/is calculated based on the method provided in S202, to determine the final upper limit value and/or the lower limit value. Details are not described herein again in this embodiment of this application.

The foregoing describes the abnormality detection method provided in embodiments of this application. The following describes apparatus embodiments of this application. The apparatus in this application may be configured to perform the abnormality detection method in embodiments of this application. For details that are not disclosed in the apparatus embodiments of this application, refer to the method embodiments of this application.

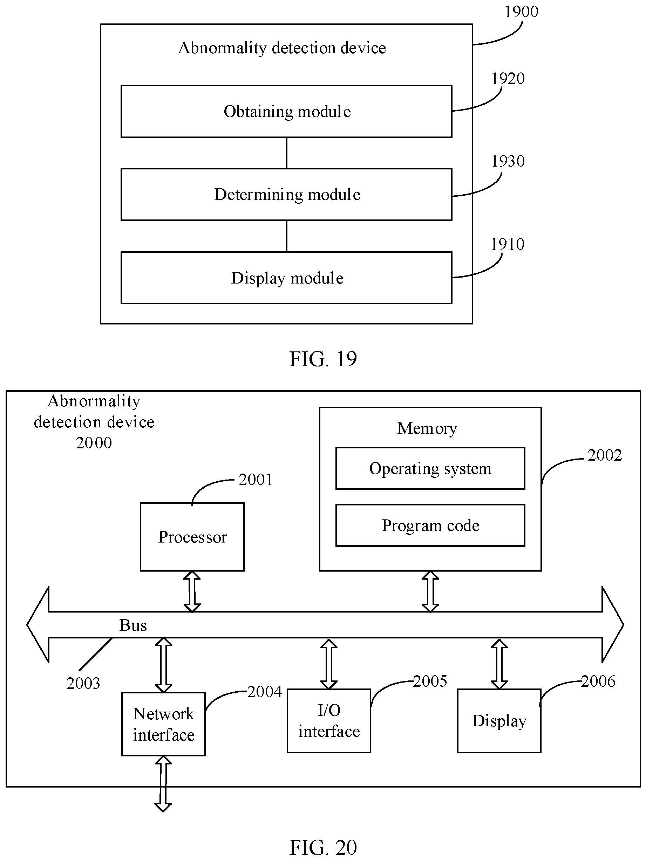

FIG. 19 is a schematic diagram of a structure of an abnormality detection apparatus 1900 according to an embodiment of this application. Refer to FIG. 19. The abnormality detection apparatus 1900 may include but is not limited to:
a display module 1910, configured to display a target interface, where n-dimensional visualization space defined by n coordinate axes, and m data points and p target regions that are located in the n-dimensional visualization space are displayed in the target interface, each coordinate axis corresponds to one detection indicator of a detected object, location data of each data point in the n-dimensional visualization space is a data record of the detected object, the data record includes n items of data, each of the n items of data is a value record of the one detection indicator of the detected object, the p target regions are determined by n one-dimensional data intervals, the n one-dimensional data intervals correspond to the n coordinate axes, each one-dimensional data interval is within a range of a corresponding coordinate axis, where n ≥ 2, m ≥ 1, p ≥ 1, and n, m, and p are all integers. For function implementation of the display module 1910, refer to the related descriptions in S101.

The display module 1910 is further configured to: If k data points in the m data points are located outside a target region, that the detected object is abnormal is displayed in the target interface, where m ≥ k ≥ 1, and k is an integer. For function implementation of the display module 1910, refer to the related description in S102.

Optionally, the display module 1910 is further configured to: If the m data points are all located in the target region, that the detected object is normal is displayed in the target interface. For function implementation of the display module 1910, refer to the related description in S103.

Optionally, the n one-dimensional data intervals correspond to n regions in n-dimensional visualization space, the target region is an overlapping region of the n regions, and the display module 1910 is specifically configured to: If k data points in the m data points are located outside an i^{th} region, that an i^{th} detection indicator of the detected object is abnormal is displayed in the target interface, where the i^{th} region is a corresponding region of an i^{th} one-dimensional data interval in the n-dimensional visualization space, and the i^{th} one-dimensional data interval corresponds to the i^{th} detection indicator of the detected object.

Optionally, the n coordinate axes correspond to n detection indicators of the detected object, the n detection indicators include processor usage and memory usage, and each data record includes processor usage of the detected object and memory usage of the detected object. The display module 1910 is specifically configured to: If k data points in the m data points are located outside a first region, that a processor usage of the detected object is abnormal is displayed in the target interface, where the first region is a corresponding region of a first one-dimensional data interval in the n-dimensional visualization space, and the first one-dimensional data interval corresponds to the processor usage; if k data points in the m data points are located outside a second region, that the memory usage of the detected object is abnormal is displayed in the target interface, where the second region is a corresponding region of a second one-dimensional data interval in the n-dimensional visualization space, and the second one-dimensional data interval corresponds to the memory usage; and if k data points in the m data points are located outside the first region and outside the second region, that of a processing capability of the detected object is abnormal is displayed in the target interface.

Optionally, the n one-dimensional data intervals correspond to the n detection indicators of the detected object, and the abnormality detection apparatus 1900 further includes:
an obtaining module 1920, configured to obtain a test data set corresponding to each of n detection indicators, where the test data set corresponding to each detection indicator includes: t items of sampled data, of the detected object, obtained by performing data sampling on the detection indicator of the detected object after a preset service pressure is applied to the detected object, where t ≥ 1, and t is an integer; for function implementation of the obtaining module 1920, refer to the related descriptions in S201; and
a determining module 1930, configured to determine, based on the test data set corresponding to each detection indicator, a one-dimensional data interval corresponding to the detection indicator; for function implementation of the determining module 1930, refer to the related description in S202.

Optionally, the determining module 1930 is specifically configured to:
determine a maximum value in t items of sampled data in the test data set as an upper limit value of the one-dimensional data interval, determine a value of an upper quartile in t items of sampled data as an upper limit value of the one-dimensional data interval, or determine an upper limit value of the one-dimensional data interval based on an average value and a variance of t items of sampled data; and
determine a minimum value in t items of sampled data in the test data set as a lower limit value of the one-dimensional data interval, determine a value of a lower quartile in t items of sampled data is determined as a lower limit value of the one-dimensional data interval, determine a lower limit value of the one-dimensional data interval based on an average value and a variance of the t items of sampled data, or determine a lower limit value of the one-dimensional data interval as 0.

Optionally, the determining module 1930 is specifically configured to:
input the t items of sampled data in the test data set into a first model, to enable the first model to perform calculation based on the t items of sampled data to obtain an upper limit value of the one-dimensional data interval; and
input the t items of sampled data in the test data set into a second model, to enable the second model to perform calculation based on the t items of sampled data to obtain a lower limit value of the one-dimensional data interval, or determine a lower limit value of the one-dimensional data interval as 0.

Optionally, the detected object is a computer, a process running in a computer, or a virtual machine running in a computer.

Optionally, the abnormality detection apparatus 1900 includes a controller or a management device configured to manage the detected object.

Optionally, the detection indicator includes at least one of the following: the processor usage, the memory usage, an amount of used memory, a quantity of used handles, a quantity of used threads, an amount of read data, an amount of written data, an amount of read/written data, a throughput, an amount of transmitted data, a service success rate, average service duration, a total quantity of executed tasks, a service saturation, a quantity of errors in executing a task, YGCT, FGCT, and a sum of the YGCT and the FGCT.

In conclusion, according to the abnormality detection apparatus provided in this embodiment of this application, n-dimensional visualization space defined by n coordinate axes, and m data points and p target regions that are located in the n-dimensional visualization space are displayed in the target interface displayed by the abnormality detection apparatus, each coordinate axis corresponds to one detection indicator of a detected object, location data of each data point in the n-dimensional visualization space is a data record of the detected object, the data record includes n items of data, each of the n items of data is a value record of the one detection indicator of the detected object, the p target regions are determined by n one-dimensional data intervals, the n one-dimensional data intervals correspond to the n coordinate axes, each one-dimensional data interval is within a range of a corresponding coordinate axis; and if k data points in the m data points are located outside a target region, and the abnormality detection apparatus displays, in the target interface, that the detected object is abnormal. According to the technical solutions provided in this embodiment of this application, the abnormality detection apparatus performs abnormality detection on the detected object by combining data of n dimensions (the data of the n dimensions forms a data record) of the detected object by using a same algorithm. This helps improve accuracy and flexibility of abnormality detection on the detected object. In addition, the abnormality detection apparatus displays, in the n-dimensional visualization space by using a data point in combination with a data region (for example, a target region), a data point that is for representing a data record of the detected object. In this case, a running status of the detected object is visualized, and a user can intuitively understand the running status of the detected object.

The abnormality detection apparatus provided in this embodiment of this application may alternatively be implemented by using an application-specific integrated circuit (application-specific integrated circuit, ASIC) or a programmable logic device (programmable logic device, PLD). The PLD may be a complex program logic device (complex programmable logical device). CPLD), field-programmable gate array (field-programmable gate array, FPGA), generic array logic (generic array logic, GAL), or any combination thereof. Alternatively, the abnormality detection method provided in the foregoing method embodiments may be implemented by using software. When the abnormality detection method provided in the foregoing method embodiments is implemented by using software, modules in the abnormality detection apparatus may also be software modules.

FIG. 20 is a schematic diagram of a structure of another abnormality detection apparatus 2000 according to an embodiment of this application. The abnormality detection apparatus 2000 may be a controller or a management device configured to manage a detected object. Refer to FIG. 20. The abnormality detection apparatus 2000 includes:
a processor 2001 and a memory 2002. The memory 2001 and the memory 2002 are connected via a bus 2003. In FIG. 20, the processor 2001 and the memory 2002 are independent of each other. Optionally, the processor 2001 and the memory 2002 are integrated together.

The memory 2002 is configured to store a computer program, and the computer program includes an operating system and program code. The memory 2002 is various types of storage media. For example, the memory 2002 is a random access memory (random access memory, RAM), a read-only memory (read-only memory, ROM), a non-volatile random access memory (non-volatile random access memory, NVRAM), a programmable read-only memory (programmable read-only memory, PROM), an erasable programmable read-only memory (erasable programmable read-only memory, EPROM), an electrically erasable programmable read-only memory (electrically erasable programmable read-only memory, EEPROM), a compact disc read-only memory (compact disc read-only Memory, CD-ROM), a flash memory, a register, an optical disk storage, an optical disk storage (including a compact disc, a laser disc, an optical disc, a digital versatile disc, a Blu-ray disc, and the like), a disk or other magnetic storage devices.

The processor 2001 is a general-purpose processor or a dedicated processor. The general-purpose processor is a processor that performs a specific step and/or operation by reading and executing a computer program stored in the memory (for example, the memory 2002). In a process of performing the foregoing steps and/or operations, the general-purpose processor may use the computer program stored in the memory (for example, the memory 2002). The computer program is executed, for example, to implement related functions of the foregoing obtaining module 1920 and determining module 1930. The general-purpose processor is, for example, but not limited to, a central processing unit (central processing unit, CPU). An application-specific processor is a processor specially designed to perform a specific step and/or operation, such as, but not limited to, a digital signal processor (digital signal processor, DSP), an application-specific integrated circuit (application-specific integrated circuit, ASIC), a complex program logic device (complex programmable logical device, CPLD), a field-programmable gate array (field-programmable gate array, FPGA), a generic array logic (generic array logic, GAL), or any combination thereof. Optionally, the processor 2001 may be a single-core (single-CPU), or may be a multi-core (multi-CPU). The processor 2001 includes at least one circuit, to perform all or some of the steps of the abnormality detection method provided in the foregoing embodiments.

Optionally, the abnormality detection apparatus 2000 further includes a network interface 2004, and the network interface 2004 is connected to the processor 2001 and the memory 2002 via the bus 2003. The network interface 2004 can implement communication between the abnormality detection apparatus 700 and another device.

Optionally, the abnormality detection apparatus 2000 further includes an input/output (input/output, I/O) interface 2005. The I/O interface 2005 is connected to the processor 2001 and the memory 2002 via the bus 2003. The processor 2001 can receive an input command, data, or the like through the I/O interface 2005. The I/O interface 2005 is configured to connect the abnormality detection apparatus 2000 to input devices. These input devices are, for example, a keyboard or a mouse.

Optionally, the abnormality detection apparatus 2000 further includes a display 2006, and the display 2006 is connected to the processor 2001 and the memory 2002 via the bus 2003. The display 2006 can be configured to display an intermediate result and/or a final result, and the like, generated by the processor 2001 by performing the foregoing abnormality detection method. For example, the display 2006 is configured to display the target interface described in the foregoing embodiment, and to display, that the detected object is normal and/or abnormal is displayed in the target interface. In a possible implementation, the display 2006 is a touch display screen, to provide a human-computer interaction interface. The display 2006 can implement related functions of the foregoing display module 1910.

Optionally, in some possible scenarios, the network interface 2004 and the I/O interface 2005 are collectively referred to as a communications interface. In addition, the communications interface further includes a transceiver to send and receive information. This is not limited in this embodiment of this application.

The bus 2003 is any type of communications bus used to implement interconnection between internal components of the abnormality detection apparatus 2000. Such as a system bus. In this embodiment of this application, an example in which the foregoing components in the abnormality detection apparatus 2000 are interconnected via the bus 2003 is used for description. Optionally, the foregoing components in the abnormality detection apparatus 2000 are communicatively connected to each other in another connection manner except the bus 2003. For example, the foregoing components inside the abnormality detection apparatus 2000 are interconnected through a logical interface inside the abnormality detection apparatus 2000.

The foregoing components may be separately disposed on chips that are independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The abnormality detection apparatus 2000 shown in FIG. 20 is merely an example. In an implementation process, the abnormality detection apparatus 2000 includes other components, which are not listed one by one in this specification. The abnormality detection apparatus 2000 shown in FIG. 20 may perform abnormality detection on a detected object (for example, a process) by performing all or a part of the steps of the abnormality detection method provided in the foregoing embodiment.

An embodiment of this application provides a computer-readable storage medium. The computer-readable storage medium stores a computer program. When the computer program is executed by a processor, all or some of the steps of the abnormality detection method provided in the foregoing method embodiments are implemented.

An embodiment of this application provides a computer program product. The computer program product includes a program or code. When the program or code runs on a processor, the processor is enabled to perform all or some of the steps of the abnormality detection method provided in the foregoing method embodiments.

An embodiment of this application provides a chip. The chip includes a programmable logic circuit and/or a program instruction. When the chip runs, the chip is configured to implement all or some of the steps of the abnormality detection method provided in the foregoing method embodiments.

All or some of the foregoing embodiments may be implemented by using software, hardware, firmware, or any combination thereof. When software is used for implementation, all or part of the implementation may be implemented in a form of a computer program product, and the computer program product includes one or more computer instructions. When the computer program instructions are loaded and executed on a computer, all or a part of the procedures or functions according to embodiments of this application are generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, "at least one" refers to one or more, and "a plurality of" refers to two or more. "At least two" means two or more. In this application, unless otherwise specified, "/" means or. For example, A/B may represent A or B. In this application, "and/or" is merely an association relationship for describing associated objects, and indicates that three relationships may exist. For example, A and/or B may indicate that only A exists, both A and B exist, and only B exists. In addition, for ease of clear description, in this application, words such as "first", "second", and "third" are used to distinguish same items or similar items with basically same functions and functions. Persons skilled in the art may understand that the words "first", "second", and "third" do not limit a quantity and an execution sequence.

Different types of embodiments, such as the method embodiments and the apparatus embodiments, that are provided in embodiments of this application, may refer to each other. This is not limited in embodiments of this application. A sequence of the operations of the method embodiments provided in embodiments of this application can be properly adjusted, and the operations can be correspondingly added or deleted based on a situation. Any modified method that can be easily figured out by persons skilled in the art without departing from a technical scope disclosed in this application shall fall within the protection scope of this application, and therefore details are not described again.

In the corresponding embodiments provided in this application, it should be understood that the disclosed apparatus and the like may be implemented in other structural manners. For example, the described apparatus embodiments are merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be performed by using some interfaces, and the indirect couplings or communication connections of the apparatuses or units may be performed in electrical or other forms.

Units described as separate parts may or may not be physically separated, and parts described as units may or may not be physical units, and may be located in one place, or may be distributed on a plurality of network devices (for example, terminal devices). Some or all of the units may be selected based on an actual requirement to achieve the objectives of the solutions of the embodiments.

The foregoing descriptions are merely example implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

## Claims

1. An abnormality detection method, wherein the method comprises:
displaying a target interface, wherein n-dimensional visualization space defined by n coordinate axes, and m data points and p target regions that are located in the n-dimensional visualization space are displayed in the target interface, each coordinate axis corresponds to one detection indicator of a detected object, location data of each data point in the n-dimensional visualization space is a data record of the detected object, the data record comprises n items of data, each of the n items of data is a value record of the one detection indicator of the detected object, the p target regions are determined by n one-dimensional data intervals, the n one-dimensional data intervals correspond to the n coordinate axes, and each one-dimensional data interval is within a range of a corresponding coordinate axis, wherein n ≥ 2, m ≥ 1, p ≥ 1, and n, m, and p are all integers; and
if k data points in the m data points are located outside a target region, displaying, in the target interface, that the detected object is abnormal, wherein m ≥ k ≥ 1, and k is an integer.

2. The method according to claim 1, wherein the method further comprises:
if the m data points are all located in the target region, displaying, in the target interface, that the detected object is normal.

3. The method according to claim 1, wherein
the n one-dimensional data intervals correspond to n regions in the n-dimensional visualization space, and the target region is an overlapping region of the n regions; and
if k data points in the m data points are located outside the target region, the displaying, in the target interface, that the detected object is abnormal comprises:
if the k data points are located outside an i^{th} region, displaying, in the target interface, that an i^{th} detection indicator of the detected object is abnormal, wherein the i^{th} region is a corresponding region of an i^{th} one-dimensional data interval in the n-dimensional visualization space, and the i^{th} one-dimensional data interval corresponds to the i^{th} detection indicator of the detected object, wherein n ≥ i ≥ 1, and i is an integer.

4. The method according to claim 3, wherein
the n coordinate axes correspond to n detection indicators of the detected object, the n detection indicators comprise a processor usage and a memory usage, and each data record comprises a processor usage of the detected object and a memory usage of the detected object; and
if the k data points are located outside an i^{th} region, the displaying, in the target interface, that an i^{th} detection indicator of the detected object is abnormal comprises:
if the k data points are located outside a first region, displaying, in the target interface, that the processor usage of the detected object is abnormal, wherein the first region is a corresponding region of a first one-dimensional data interval in the n-dimensional visualization space, and the first one-dimensional data interval corresponds to the processor usage;
if the k data points are located outside a second region, displaying, in the target interface, that the memory usage of the detected object is abnormal, wherein the second region is a corresponding region of a second one-dimensional data interval in the n-dimensional visualization space, and the second one-dimensional data interval corresponds to the memory usage; or
if the k data points are located outside a first region and outside a second region, displaying, in the target interface, that a processing capability of the detected object is abnormal.

5. The method according to any one of claims 1 to 4, wherein
the n one-dimensional data intervals correspond to the n detection indicators of the detected object, and the method further comprises:
obtaining a test data set corresponding to each of n detection indicators, wherein the test data set corresponding to each detection indicator comprises: t items of sampled data, of the detected object, obtained by performing data sampling on the detection indicator of the detected object after a preset service pressure is applied to the detected object, wherein t ≥ 1, and t is an integer; and
determining, based on the test data set corresponding to each detection indicator, a one-dimensional data interval corresponding to the detection indicator.

6. The method according to claim 5, wherein the determining, based on the test data set corresponding to each detection indicator, a one-dimensional data interval corresponding to the detection indicator comprises:
determining a maximum value in the t items of sampled data in the test data set as an upper limit value of the one-dimensional data interval, determining a value of an upper quartile in the t items of sampled data as an upper limit value of the one-dimensional data interval, or determining an upper limit value of the one-dimensional data interval based on an average value and a variance of the t items of sampled data; and
determining a minimum value in the t items of sampled data in the test data set as a lower limit value of the one-dimensional data interval, determining a value of a lower quartile in the t items of sampled data as a lower limit value of the one-dimensional data interval, determining a lower limit value of the one-dimensional data interval based on the average value and the variance of the t items of sampled data, or determining a lower limit value of the one-dimensional data interval as 0.

7. The method according to claim 5, wherein the determining, based on the test data set corresponding to each detection indicator, a one-dimensional data interval corresponding to the detection indicator comprises:
inputting the t items of sampled data in the test data set into a first model, to enable the first model to perform calculation based on the t items of sampled data to obtain an upper limit value of the one-dimensional data interval; and
inputting the t items of sampled data in the test data set into a second model, to enable the second model to perform calculation based on the t items of sampled data to obtain a lower limit value of the one-dimensional data interval, or determine a lower limit value of the one-dimensional data interval as 0.

8. The method according to any one of claims 1 to 7, wherein the detected object is a computer, a process running in a computer, or a virtual machine running in a computer.

9. The method according to any one of claims 1 to 8, wherein the method is executed by a controller or a management device configured to manage the detected object.

10. The method according to any one of claims 1 to 9, wherein
the detection indicator comprises at least one of the following: the processor usage, the memory usage, an amount of used memory, a quantity of used handles, a quantity of used threads, an amount of read data, an amount of written data, an amount of read/written data, a throughput, an amount of transmitted data, a service success rate, average service duration, a total quantity of executed tasks, a service saturation, a quantity of errors in executing a task, a young generation garbage collection time (YGCT), a full generation garbage collection time (FGCT), and a sum of the YGCT and the FGCT.

11. An abnormality detection apparatus, wherein the apparatus comprises:
a display module, configured to display a target interface, wherein n-dimensional visualization space defined by n coordinate axes, and m data points and p target regions that are located in the n-dimensional visualization space are displayed in the target interface, each coordinate axis corresponds to one detection indicator of a detected object, location data of each data point in the n-dimensional visualization space is a data record of the detected object, the data record comprises n items of data, each of the n items of data is a value record of the one detection indicator of the detected object, the p target regions are determined by n one-dimensional data intervals, the n one-dimensional data intervals correspond to the n coordinate axes, and each one-dimensional data interval is within a range of a corresponding coordinate axis, wherein n ≥ 2, m ≥ 1, p ≥ 1, and n, m, and p are all integers, wherein
the display module is further configured to: if k data points in the m data points are located outside a target region, display, in the target interface, that the detected object is abnormal, wherein m ≥ k ≥ 1, and k is an integer.

12. The apparatus according to claim 11, wherein
the display module is further configured to: if the m data points are all located in the target region, display, in the target interface, that the detected object is normal.

13. The apparatus according to claim 11, wherein
the n one-dimensional data intervals correspond to n regions in the n-dimensional visualization space, and the target region is an overlapping region of the n regions; and
the display module is specifically configured to: if the k data points are located outside an i^{th} region, display, in the target interface, that an i^{th} detection indicator of the detected object is abnormal, wherein the i^{th} region is a corresponding region of an i^{th} one-dimensional data interval in the n-dimensional visualization space, and the i^{th} one-dimensional data interval corresponds to the i^{th} detection indicator of the detected object, wherein n ≥ i ≥ 1, and i is an integer.

14. The apparatus according to claim 13, wherein
the n coordinate axes correspond to n detection indicators of the detected object, the n detection indicators comprise a processor usage and a memory usage, each data record comprises a processor usage of the detected object and a memory usage of the detected object, and the display module is specifically configured to:
if the k data points are located outside a first region, display, in the target interface, that the processor usage of the detected object is abnormal, wherein the first region is a corresponding region of a first one-dimensional data interval in the n-dimensional visualization space, and the first one-dimensional data interval corresponds to the processor usage;
if the k data points are located outside a second region, display, in the target interface, that the memory usage of the detected object is abnormal, wherein the second region is a corresponding region of a second one-dimensional data interval in the n-dimensional visualization space, and the second one-dimensional data interval corresponds to the memory usage; or
if the k data points are located outside a first region and outside a second region, display, in the target interface, that a processing capability of the detected object is abnormal.

15. The apparatus according to any one of claims 11 to 14, wherein
the n one-dimensional data intervals correspond to the n detection indicators of the detected object, and the apparatus further comprises:
an obtaining module, configured to obtain a test data set corresponding to each of n detection indicators, wherein the test data set corresponding to each detection indicator comprises: t items of sampled data, of the detected object, obtained by performing data sampling on the detection indicator of the detected object after a preset service pressure is applied to the detected object, wherein t ≥ 1, and t is an integer; and
a determining module, configured to determine, based on the test data set corresponding to each detection indicator, a one-dimensional data interval corresponding to the detection indicator.

16. The apparatus according to claim 15, wherein the determining module is specifically configured to:
determine a maximum value in the t items of sampled data in the test data set as an upper limit value of the one-dimensional data interval, determine a value of an upper quartile in the t items of sampled data as an upper limit value of the one-dimensional data interval, or determine an upper limit value of the one-dimensional data interval based on an average value and a variance of the t items of sampled data; and
determine a minimum value in the t items of sampled data in the test data set as a lower limit value of the one-dimensional data interval, determine a value of a lower quartile in the t items of sampled data as a lower limit value of the one-dimensional data interval, determine a lower limit value of the one-dimensional data interval based on the average value and the variance of the t items of sampled data, or determine a lower limit value of the one-dimensional data interval as 0.

17. The apparatus according to claim 15, wherein the determining module is specifically configured to:
input the t items of sampled data in the test data set into a first model, to enable the first model to perform calculation based on the t items of sampled data to obtain an upper limit value of the one-dimensional data interval; and
input the t items of sampled data in the test data set into a second model, to enable the second model to perform calculation based on the t items of sampled data to obtain a lower limit value of the one-dimensional data interval, or determine a lower limit value of the one-dimensional data interval as 0.

18. The apparatus according to any one of claims 11 to 17, wherein the detected object is a computer, a process running in a computer, or a virtual machine running in a computer.

19. The apparatus according to any one of claims 11 to 18, wherein the apparatus comprises: a controller or a management device configured to manage the detected object.

20. The apparatus according to any one of claims 11 to 19, wherein
the detection indicator comprises at least one of the following: the processor usage, the memory usage, an amount of used memory, a quantity of used handles, a quantity of used threads, an amount of read data, an amount of written data, an amount of read/written data, a throughput, an amount of transmitted data, a service success rate, average service duration, a total quantity of executed tasks, a service saturation, a quantity of errors in executing a task, a young generation garbage collection time (YGCT), a full generation garbage collection time (FGCT), and a sum of the YGCT and the FGCT.

21. An abnormality detection apparatus, wherein the abnormality detection apparatus comprises a memory and a processor;
the memory is configured to store a computer program; and
the processor is configured to execute the computer program stored in the memory, to enable the abnormality detection apparatus to perform the abnormality detection method according to any one of claims 1 to 10.

22. A computer-readable storage medium, wherein the computer-readable storage medium stores a computer program; and when the computer program is executed by a processor, the abnormality detection method according to any one of claims 1 to 10 is implemented.

23. A computer program product, wherein the computer program product comprises a program or code; and when the program or code is run on a processor, the abnormality detection method according to any one of claims 1 to 10 is implemented.
